# EUROPEAN PATENT APPLICATION

(11) **EP 2 490 449 A1**
(43) Date of publication of application: **22.08.2012**
(21) Application number: 10823276.0
(22) Date of filing: 22.09.2010
(51) Int. Cl.: H04N 7/32

(54) **VIDEO CODING DEVICE AND VIDEO DECODING DEVICE**

(30) Priority: 16.10.2009 JP 2009239762
(71) Applicant: Sharp Kabushiki Kaisha, Osaka-shi, Osaka 545-8522 (JP)
(72) Inventor: AONO, Tomoko, Osaka-shi, Osaka 545-8522 (JP); KITAURA, Yoshihiro, Osaka-shi, Osaka 545-8522 (JP); IKAI, Tomohiro, Osaka-shi, Osaka 545-8522 (JP)
(74) Representative: Müller - Hoffmann & Partner
(86) International application number: PCT/JP2010/066445
(87) International publication number: WO 2011/046008

(57) **Abstract**

The present invention relates to a device including (i) a spatial-direction prediction vector generating section (191) which calculates a first prediction vector group by referring to a first motion vector group made up of motion vectors for encoded partitions, (ii) a temporal-direction prediction vector generating section (192) which calculates a second prediction vector group by referring to a second motion vector group made up of motion vectors for partitions around a collocated partition, and (iii) a prediction vector selecting section (194) which assigns, to the target partition, a prediction vector selected from prediction vectors in the first prediction vector group or from prediction vectors in the second prediction vector group based on variation of the first motion vector group and variation of the second motion vector group.

## Description

### Technical Field

The present invention relates to a video encoding device which encodes a video so as to generate encoded data. The present invention relates also to a video decoding device which decodes encoded data generated by the use of such a video encoding device.

### Background Art

A video encoding device is used to efficiently transmit or record a video. When the video encoding device encodes the video, a motion compensation prediction is employed, in which a motion vector is used. Examples of a video encoding method with the use of motion compensation prediction encompasses H.264/MPEG-4 AVC.

Non Patent Literature 1 discloses a technique in which (i) each frame of an inputted video is divided into a plurality of partitions, (ii) a prediction vector, which is to be assigned to a partition (hereinafter, referred to as "target partition") which is to be encoded, is estimated by the use of a median (medium value) of motion vectors assigned to respective of (a) a partition adjacent to a left side of the target partition, (b) a partition adjacent to an upper side of the target partition, and (c) a partition located upper right of the target partition, and (iii) the prediction vector thus calculated is encoded.

Non Patent Literature 2 discloses a technique called "MV Competition", in which a candidate prediction vector, which is to be assigned to the target partition, is generated with the use of a median of motion vectors assigned to respective of (a) a collocated partition which is in a frame previous to a frame having the target partition to be encoded and is at the same location as the target partition and (b) a plurality of partitions located around the collocated partition, and then a candidate prediction vector being higher in encoding efficiency is selected, as a prediction vector, from the candidate prediction vector generated above and a candidate prediction vector estimated based on the technique disclosed in Non Patent Literature 1.

### Citation List

### [Non Patent Literature]

[Non Patent Literature 1]
   ITU-T Recommendation H.264 (11/07) (Published in November, 2007)
[Non Patent Literature 2]
   ITU-T T09-SG16-VCEG-AC06 "Competition-Based Scheme for Motion Vector Selection and Coding" (Published in July, 2006)

### Summary of Invention

### Technical Problem

However, according to the technique disclosed in Non Patent Literature 2, it is necessary to transmit, to the decoding device, flags each of which is indicative of which candidate prediction vector has been selected as the prediction vector assigned to a corresponding one of the partitions. This causes a problem of a decrease in encoding efficiency. Moreover, there is also a problem as follows: that is, if the technique disclosed in Non Patent Literature 2 is applied to a case where the number of candidate prediction vectors is three or more, an amount of the flags is increased, and accordingly the encoding efficiency will be decreased.

The present invention is accomplished in view of the problems, and its object is to provide a video encoding device which carries out encoding with high efficiency by reducing an amount of flags each indicative of which of candidate prediction vectors is selected, even in a case where a prediction vector is selected from a plurality of candidate prediction vectors.

### Solution to Problem

In order to attain the object, a video encoding device of the present invention is configured to encode a video together with a difference vector between a prediction vector and a motion vector, which are assigned to each of a plurality of partitions obtained by dividing a frame constituting the video, the video encoding device includes: first calculating means for calculating a first prediction vector group by referring to a first motion vector group, the first motion vector group being made up of first motion vectors assigned to respective encoded partitions which are located around a target partition in a target frame, and the first prediction vector group being made up of first prediction vectors which are candidates for a prediction vector which is to be assigned to the target partition; second calculating means for calculating a second prediction vector group by referring to a second motion vector group, the second motion vector group being made up of second motion vectors assigned to respective partitions which are located around a collocated partition in an encoded frame, the collocated partition being at the same location as the target partition, and the second prediction vector group being made up of second prediction vectors which are candidates for the prediction vector which is to be assigned to the target partition; and selecting means for selecting a prediction vector to be assigned to the target partition, the selecting means determining the prediction vector to be assigned to the target partition from the first prediction vector group or from the second prediction vector group based on first variation of the first motion vectors in the first motion vector group and second variation of the second motion vectors in the second motion vector group.

As above described, the video encoding device of the present invention includes the selecting means for selecting a prediction vector to be assigned to the target partition, the selecting means determining the prediction vector to be assigned to the target partition from the first prediction vector group or from the second prediction vector group based on first variation of the first motion vector group and second variation of the second motion vector group. It is therefore possible to determine which of the prediction vectors is to be assigned to the target partition based on the first variation and the second variation.

On the other hand, the prediction vector, which has been assigned to the target partition by the video encoding device, can be reconstructed by the decoding device based on the reconstructed first variation of the first motion vector group and the reconstructed second variation of the second motion vector group.

Specifically, according to the video encoding device configured as above described, it is possible to select the prediction vector from a plurality of candidate prediction vectors without generating any flag which is indicative of which of the plurality of candidate prediction vectors has been selected.

With the configuration above described, it is possible to bring about an effect of providing a video encoding device which carries out encoding with high efficiency, even in a case where a prediction vector is selected from a plurality of candidate prediction vectors.

A video decoding device of the present invention is configured to decode encoded data obtained by encoding a video together with a difference vector between a prediction vector and a motion vector, which are assigned to each of a plurality of partitions obtained by dividing a frame constituting the video, the video decoding device includes: first calculating means for calculating a first prediction vector group by referring to a first motion vector group, the first motion vector group being made up of first motion vectors assigned to respective decoded partitions which are located around a target partition in a target frame, and the first prediction vector group being made up of first prediction vectors which are candidates for a prediction vector which is to be assigned to the target partition; second calculating means for calculating a second prediction vector group by referring to a second motion vector group, the second motion vector group being made up of second motion vectors assigned to respective partitions which are located around a collocated partition in a decoded frame, the collocated partition being at the same location as the target partition, and the second prediction vector group being made up of second prediction vectors which are candidates for the prediction vector which is to be assigned to the target partition; and selecting means for selecting a prediction vector to be assigned to the target partition, the selecting means determining the prediction vector to be assigned to the target partition from the first prediction vector group or from the second prediction vector group based on first variation of the first motion vectors in the first motion vector group and second variation of the second motion vectors in the second motion vector group.

The video decoding device configured as above can decode the prediction vector without requiring any flag indicative of which of the candidate prediction vectors has been selected. It is therefore possible to bring about an effect of decoding encoded data which has been generated by encoding with high efficiency without generating a flag indicative of which of the prediction vectors has been selected.

### Advantageous Effects of Invention

As above described, the video encoding device of the present invention is configured to encode a video together with a difference vector between a prediction vector and a motion vector, which are assigned to each of a plurality of partitions obtained by dividing a frame constituting the video, the video encoding device includes: first calculating means for calculating a first prediction vector group by referring to a first motion vector group, the first motion vector group being made up of first motion vectors assigned to respective encoded partitions which are located around a target partition in a target frame, and the first prediction vector group being made up of first prediction vectors which are candidates for a prediction vector which is to be assigned to the target partition; second calculating means for calculating a second prediction vector group by referring to a second motion vector group, the second motion vector group being made up of second motion vectors assigned to respective partitions which are located around a collocated partition in an encoded frame, the collocated partition being at the same location as the target partition, and the second prediction vector group being made up of second prediction vectors which are candidates for the prediction vector which is to be assigned to the target partition; and selecting means for selecting a prediction vector to be assigned to the target partition, the selecting means determining the prediction vector to be assigned to the target partition from the first prediction vector group or from the second prediction vector group based on first variation of the first motion vectors in the first motion vector group and second variation of the second motion vectors in the second motion vector group.

With the configuration, it is possible to provide the video encoding device which carries out encoding with high efficiency by reducing an amount of flags each indicative of which of candidate prediction vectors is selected, even in a case where a prediction vector is selected from a plurality of candidate prediction vectors.

### Brief Description of Drawings

Fig. 1

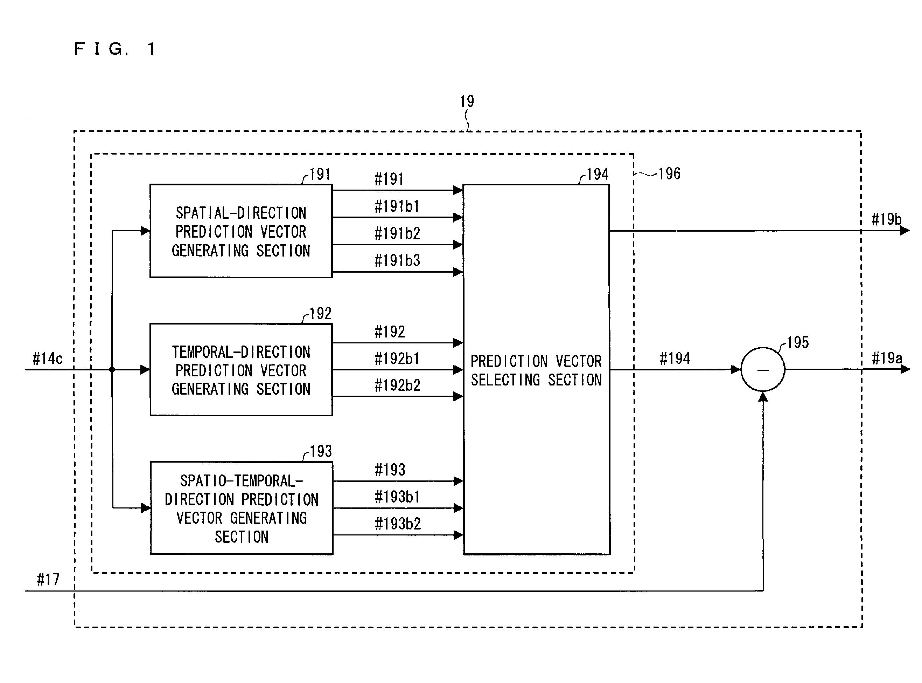

   Fig. 1 is a block diagram illustrating a configuration of a motion vector redundancy reducing section of a video encoding device, in accordance with an embodiment of the present invention.
Fig. 2

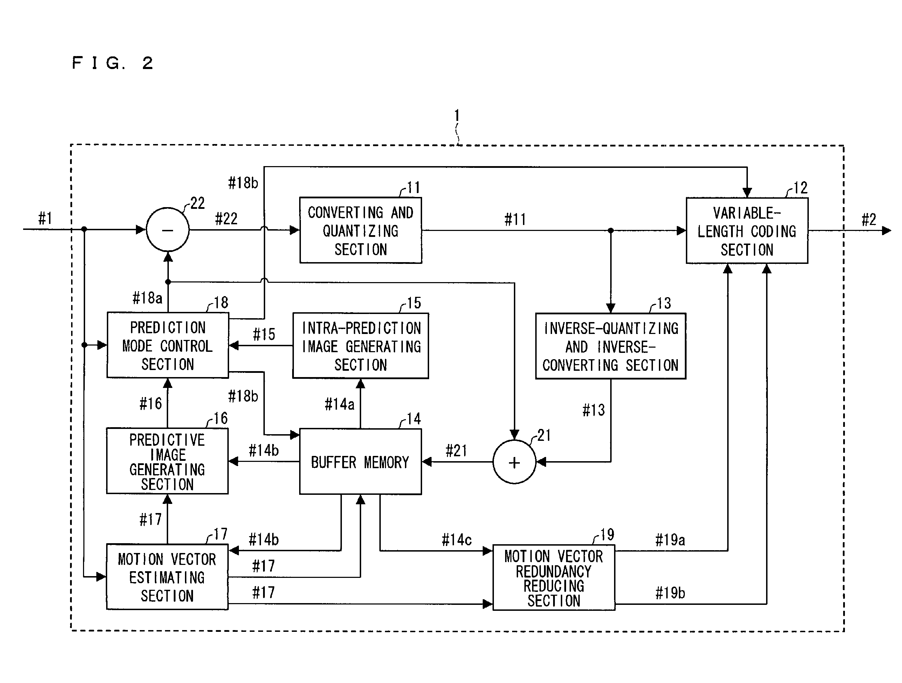

   Fig. 2 is a block diagram illustrating a configuration of a video encoding device, in accordance with an embodiment of the present invention.
Fig. 3

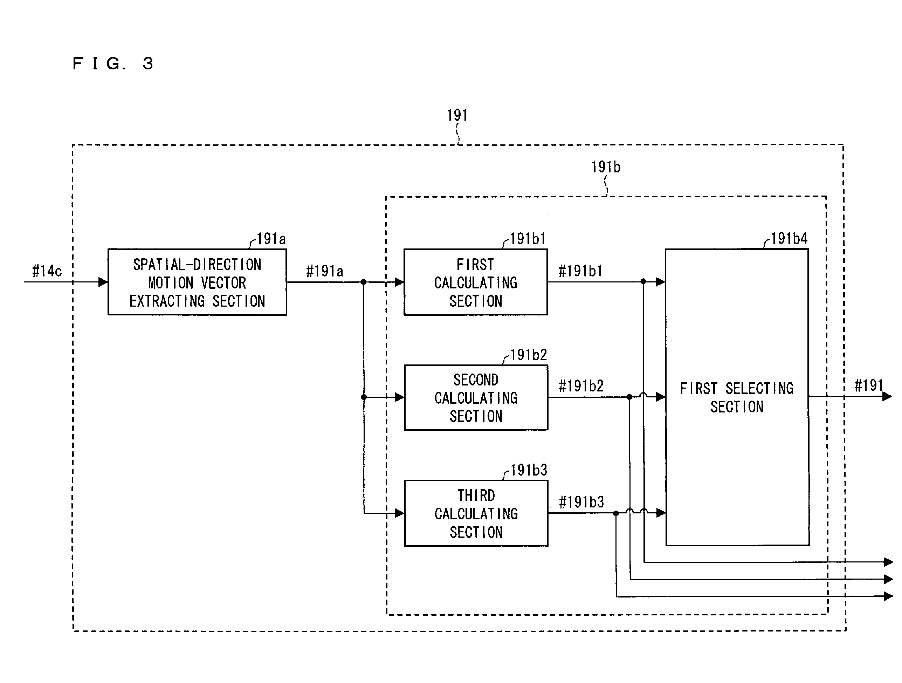

   Fig. 3 is a block diagram illustrating a configuration of a spatial-direction prediction vector generating section of a video encoding device, in accordance with an embodiment of the present invention.
Fig. 4

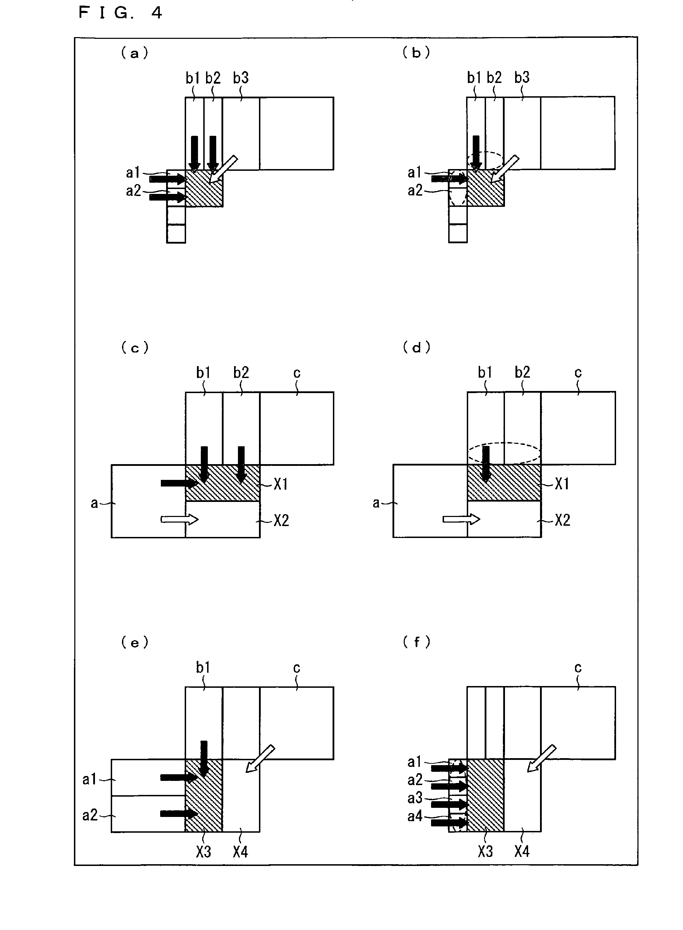

   Fig. 4 is a view for explaining how a spatial-direction prediction vector calculating section operates, in a case where first at least one partition is adjacent to a left side of the target partition and second at least one partition is adjacent to an upper side of the target partition. (a) and (b) of Fig. 4 illustrate a case where two partitions are adjacent to the left side of the target partition and two partitions are adjacent to the upper side of the target partition. (c) and (d) of Fig. 4 illustrate a case where (i) a macroblock made up of 16 × 16 pixels is equally divided into upper and lower target partitions, (ii) one (1) partition is adjacent to a left side of the macroblock, and (iii) two partitions are adjacent to an upper side of the macroblock. (e) of Fig. 4 illustrates a case where (i) a macroblock made up of 16 × 16 pixels is equally divided into right and left target partitions, (ii) two partitions are adjacent to a left side of the macroblock, and (iii) two partitions are adjacent to an upper side of the macroblock. (f) of Fig. 4 illustrates a case where (i) a macroblock made up of 16 × 16 pixels is equally divided into right and left target partitions, (ii) four partitions are adjacent to a left side of the macroblock, and (iii) three partitions are adjacent to an upper side of the macroblock.
Fig. 5

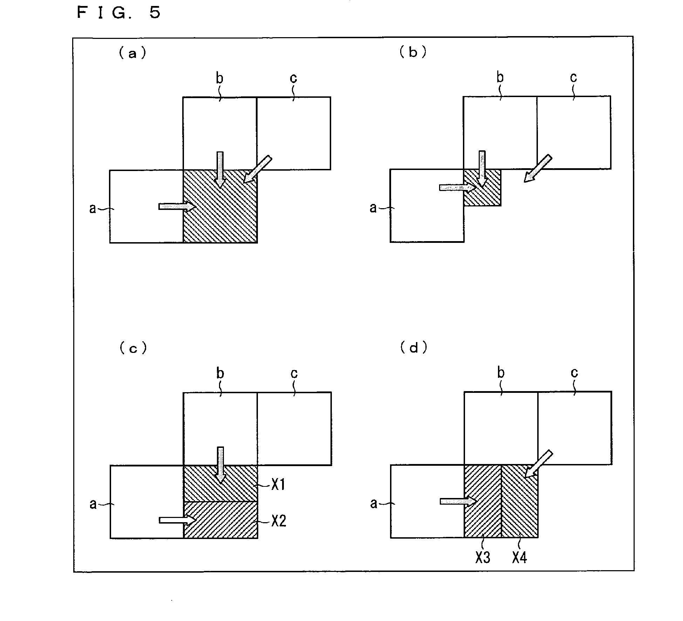

   Fig. 5 is a view for explaining how a spatial-direction prediction vector calculating section operates, in a case where two partitions are adjacent to respective of a left side and an upper side of the target partition. (a) of Fig. 5 illustrates a case where two partitions, each of which has a size identical with that of the target partition, are adjacent to respective of the left side and the upper side of the target partition. (b) of Fig. 5 illustrates a case where two partitions, each of which has a size larger than that of the target partition, are adjacent to respective of the left side and the upper side of the target partition. (c) of Fig. 5 illustrates a case where a macroblock made up of 16 × 16 pixels is equally divided into upper and lower target partitions and two partitions are adjacent to respective of a left side and an upper side of the macroblock. (d) of Fig. 5 illustrates a case where a macroblock made up of 16 × 16 pixels is equally divided into left and right target partitions and two partitions are adjacent to respective of a left side and an upper side of the macroblock.
Fig. 6

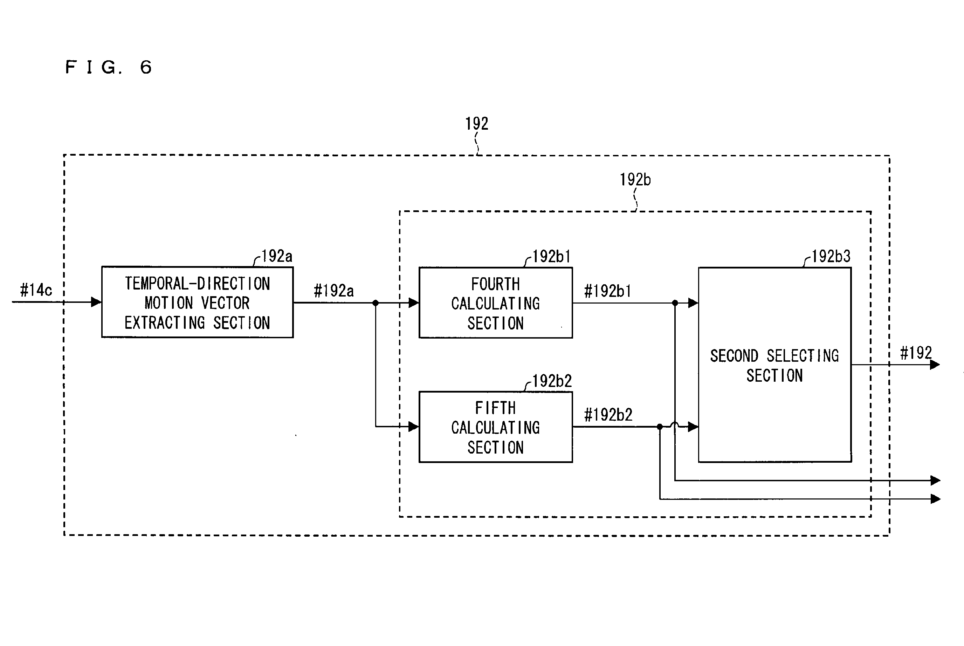

   Fig. 6 is a block diagram illustrating a configuration of a temporal-direction prediction vector generating section of a video encoding device, in accordance with an embodiment of the present invention.
Fig. 7

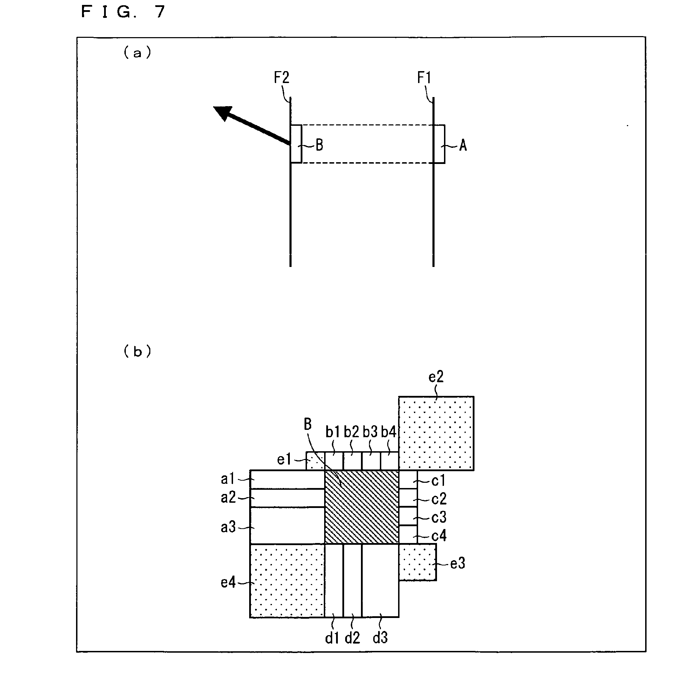

   Fig. 7 is a view for explaining how each section of a temporal-direction prediction vector calculating section operates, which is included in the video encoding device in accordance with an embodiment of the present invention. (a) of Fig. 7 schematically illustrates a positional relation between a target partition and a collocated partition. (b) of Fig. 7 illustrates a plurality of partitions adjacent to the collocated partition.
Fig. 8

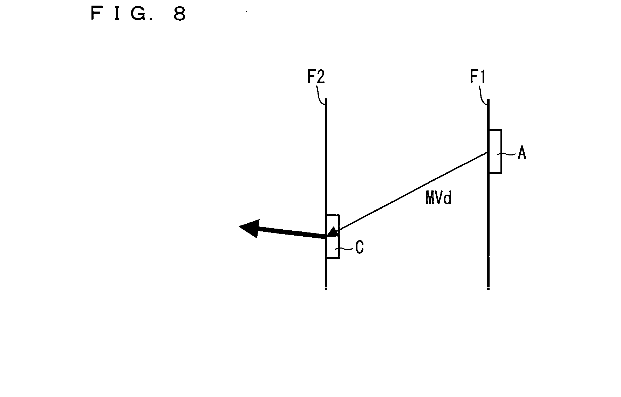

   Fig. 8 is a view for explaining how each section of a temporal-direction prediction vector calculating section operates, by schematically illustrating a positional relation between a target partition and a partition used to calculate a prediction vector.
Fig. 9

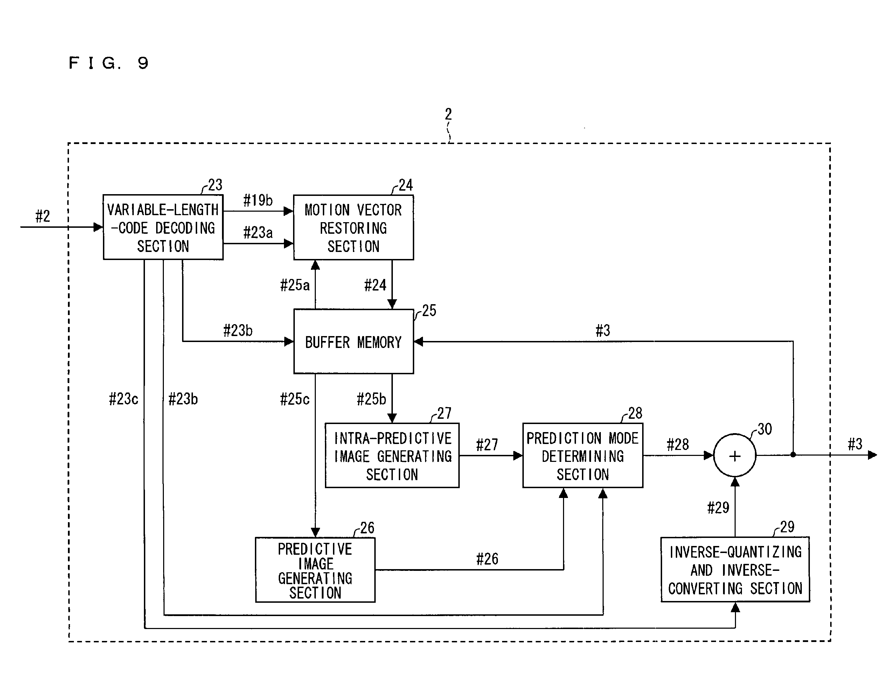

   Fig. 9 is a block diagram illustrating a configuration of a video decoding device, in accordance with an embodiment of the present invention.
Fig. 10

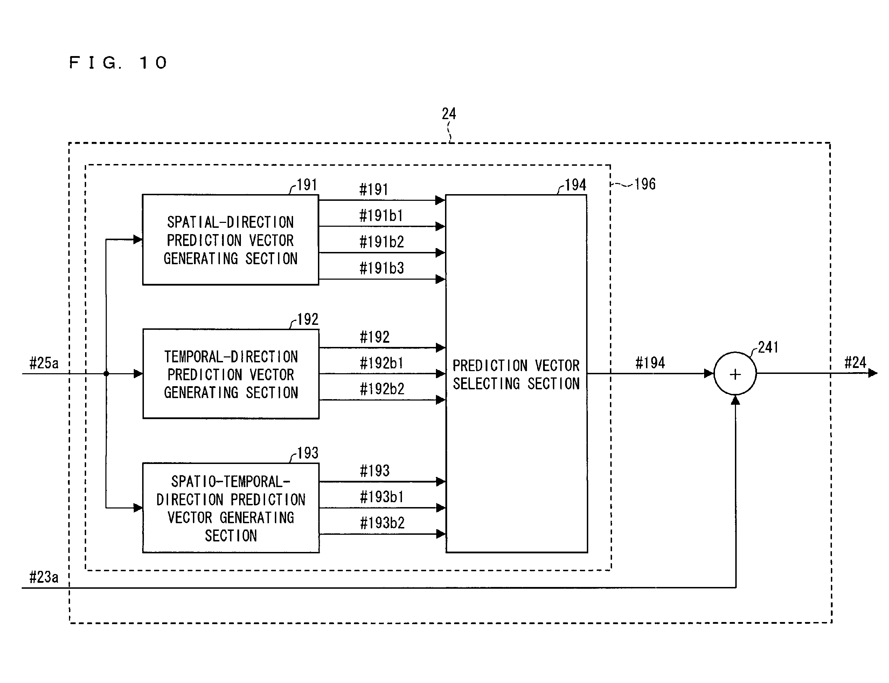

   Fig. 10 is a block diagram illustrating a configuration of a motion vector reconstructing section of a video decoding device, in accordance with an embodiment of the present invention.
Fig. 11

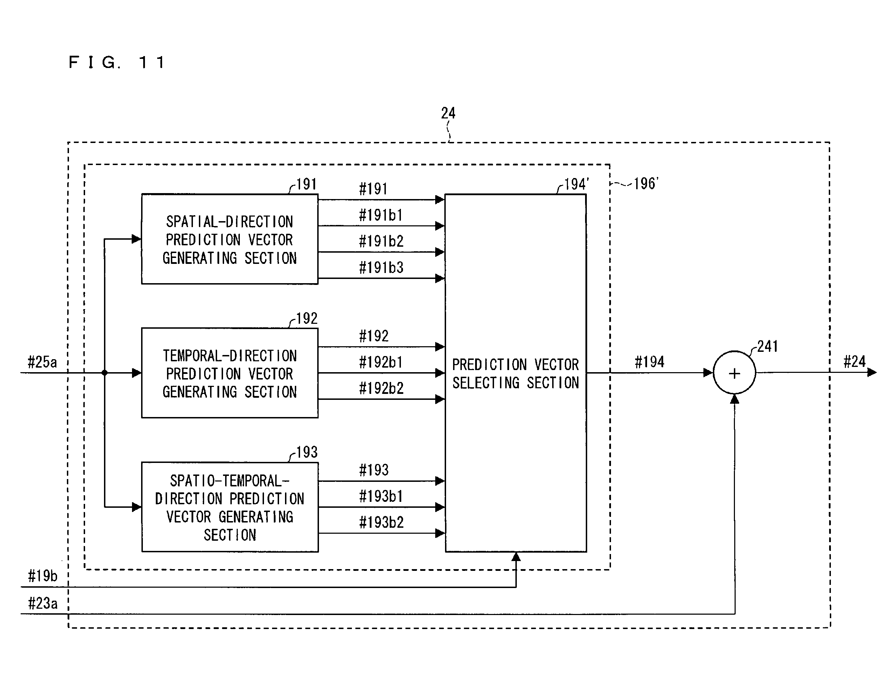

   Fig. 11 is a block diagram illustrating another configuration of a motion vector reconstructing section of a video decoding device, in accordance with an embodiment of the present invention.
Fig. 12

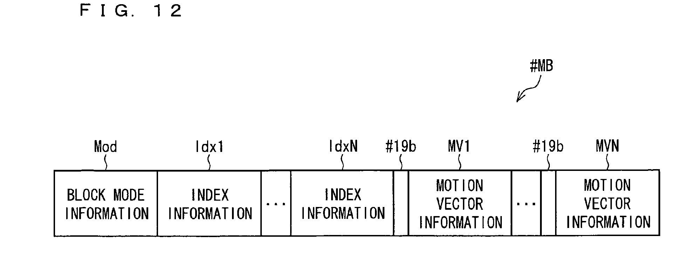

   Fig. 12 is a view illustrating a bit stream of each of macroblocks in encoded data, which has been generated by the use of a video encoding device in accordance with an embodiment of the present invention.

### Description of Embodiments

### (Video Encoding Device 1)

The following description will discuss, with reference to Figs. 1 through 8, a configuration of a video encoding device 1 in accordance with the present embodiment.

Fig. 2 is a block diagram illustrating a configuration of the video encoding device 1.

The video encoding device 1 includes a transforming and quantizing section 11, a variable-length coding section 12, an inverse-quantizing and inverse-transform section 13, a buffer memory 14, an intra-predictive image generating section 15, a predictive image generating section 16, a motion vector estimating section 17, a prediction mode control section 18, a motion vector redundancy reducing section 19, an adder 21, and a subtracter 22 (see Fig. 2).

Input images #1 are sequentially supplied to the video encoding device 1. The input images #1 are image signals, which correspond to respective frames of video data. The input images #1 can be, for example, image signals corresponding to respective frames of a progressive signal whose frequency is 60 Hz.

The video encoding device 1 encodes the input images #1 so as to output pieces of encoded data #2.

By carrying out a DCT (Discrete Cosine Transform) conversion, the transforming and quantizing section 11 transforms, into a frequency component, a difference image #22 which is a difference between (i) an input image #1, which has been divided into a plurality of block images (hereinafter, referred to as "macroblock") each of which is made up of images displayed by a plurality of pixels adjacent to each other and (ii) a predictive image #18a which has been supplied from the prediction mode control section 18 (later described). After the conversion, the transforming and quantizing section 11 generates quantized prediction residual data #11 by quantizing the frequency component. Here, the term "quantizing" means an arithmetical operation in which the frequency component is associated with an integer. Hereinafter, a macroblock, which is to be processed, is referred to as a "target macroblock".

Note that the macroblock has a size of, for example, 16 × 16 pixels. However, the present embodiment is not limited to a specific size of the macroblock. The present embodiment can therefore appropriately employ a macroblock which has a size larger than the 16 × 16 pixels, e.g., 16 × 32 pixels, 32 × 32 pixels, or 64 × 64 pixels.

The inverse-quantizing and inverse-transform section 13 decodes the quantized prediction residual data #11 so as to generate a prediction residual #13. Specifically, the inverse-quantizing and inverse-transform section 13 carries out an inverse-quantization with respect to the quantized prediction residual data #11, that is, associates the integer, constituting the quantized prediction residual data #11, with the frequency component. Furthermore, the inverse-quantizing and inverse-transform section 13 carries out an inverse DCT, that is, transforms the frequency component into a pixel component of the target macroblock. The prediction residual #13 is thus generated.

The adder 21 adds the prediction residual #13 to the predictive image #18a so as to generate a decoded image #21. The decoded image #21 is stored in the buffer memory 14.

The intra-predictive image generating section 15 generates an intra-predictive image #15, by (i) extracting a local decoded image #14a (which is a decoded area for a frame which frame is also for the target macroblock) from the decoded image #21 stored in the buffer memory 14 and then (ii) carrying out a prediction in the frame based on the local decoded image #14a. Note that the intra-predictive image #15 has a size of, for example, 16 × 16 pixels, 8 × 8 pixels, or 4 × 4 pixels. However, the present embodiment is not limited to a specific size of the intra-predictive image #15. In a case where the macroblock has a size larger than, for example, 16 × 16 pixels, like 32 × 32 pixels or 64 × 64 pixels, the intra-predictive image #15 can also have a size larger than 16 × 16 pixels.

The motion vector estimating section 17 divides the target macroblock into a plurality of partitions, and then sequentially assigns motion vectors to the respective plurality of partitions. Note that the target macroblock can be used as a single partition, instead of being divided into the plurality of partitions. Specifically, the motion vector estimating section 17 calculates a motion vector #17 by using an image (hereinafter, referred to as "reference image #14b"), whose entire frame is decoded and is stored in the buffer memory 14. Then, the motion vector estimating section 17 assigns the motion vector #17 to a partition of the plurality of partitions of the input image #1, which partition (hereinafter, referred to as "target partition") is to be processed. The motion vector #17, which has been calculated by the motion vector estimating section 17, is (i) supplied to the predictive image generating section 16 and to the motion vector redundancy reducing section 19 and (ii) stored in the buffer memory 14.

Note that each of the plurality of partitions has a size of, for example, 16 × 16 pixels, 16 × 8 pixels, 8 × 16 pixels, 8 × 8 pixels, 8 × 4 pixels, 4 × 8 pixels, or 4 × 4 pixels. However, the present embodiment is not limited to a specific size of a partition. In a case where the macroblock has a size larger than, for example, 16 × 16 pixels, like 32 × 32 pixels or 64 × 64 pixels, each of the plurality of partitions can also have a size larger than 16 × 16 pixels.

The predictive image generating section 16 generates an inter-predictive image #16 by making, for each of the plurality of partitions, a motion compensation based on a corresponding motion vector #17 with respect to the reference image #14b stored in the buffer memory 14.

The prediction mode control section 18 makes a comparison, for each macroblock, between the input image #1 and each of the intra-predictive image #15 and the inter-predictive image #16 so as to select one of the intra-predictive image #15 and the inter-predictive image #16. Then, the prediction mode control section 18 outputs, as the predictive image #18a, a selected one of the intra-predictive image #15 and the inter-predictive image #16. The prediction mode control section 18 further outputs prediction mode information #18b indicative of which one of the intra-predictive image #15 and the inter-predictive image #16 has been selected. The predictive image #18a is supplied to the subtracter 22.

The prediction mode information #18b is (i) stored in the buffer memory 14 and (ii) supplied to the variable-length coding section 12.

After the motion vector #17 is assigned to the target partition by the motion vector estimating section 17, the motion vector redundancy reducing section 19 calculates a prediction vector based on a motion vector group #14c made up of motion vectors which are (i) assigned to the respective other partitions and (ii) stored in the buffer memory 14. The motion vector redundancy reducing section 19 calculates a difference between the prediction vector and the motion vector #17 so as to further generate a difference motion vector #19a. A generated difference motion vector #19a is supplied to the variable-length coding section 12. In a case where there are a plurality of prediction vectors, the motion vector redundancy reducing section 19 can output a flag #19b indicative of which one of the plurality of prediction vectors has been used to generate the difference motion vector #19a. The motion vector redundancy reducing section 19 will be discussed later in detail, and therefore descriptions regarding the motion vector redundancy reducing section 19 are omitted here.

The variable-length coding section 12 generates the encoded data #2, by carrying out variable-length coding with respect to the quantized prediction residual data #11, the difference motion vector #19a, the prediction mode information #18b, and the flag #19b.

The subtracter 22 carries out, with respect to the target macroblock, a calculation of a difference between the input image #1 and the predictive image #18a so as to generate and output the difference image #22.

### (Motion Vector Redundancy Reducing Section 19)

Fig. 1 is a block diagram illustrating a configuration of the motion vector redundancy reducing section 19. The motion vector redundancy reducing section 19 includes a prediction vector generating section 196 and a subtracter 195 (see Fig. 1). The prediction vector generating section 196 includes a spatial-direction prediction vector generating section 191, a temporal-direction prediction vector generating section 192, a spatio-temporal-direction prediction vector generating section 193, and a prediction vector selecting section 194 (see Fig. 1).

The following description will discuss a case where the encoding processes with respect to respective target partitions are sequentially carried out, for each frame, in a direction from upper left to upper right of the each frame, and then the left-to-right encoding processes are sequentially carried out from top to bottom of the each frame. However, the present embodiment is not limited to a specific direction in which the encoding processes are carried out. In a case where, for example, the encoding processes with respect to respective target partitions for each frame are sequentially carried out in a direction from upper left to down left of the each frame, and then the top-to-bottom encoding processes are sequentially carried out from left to right of the each frame, the present embodiment is easily applicable to such a case by reading terms "left side", "upper side", "right side", and "rightmost" in the descriptions below as "upper side", "left side", "lower side", and "lowermost", respectively. The present embodiment can be easily applied, by similarly replacing the above terms, to other cases where the encoding processes are carried out with respect to respective target partitions in each frame in other order.

### (Spatial-direction Prediction Vector Generating Section 191)

The following description will discuss the spatial-direction prediction vector generating section 191 with reference to Figs. 3 through 5. Fig. 3 is a block diagram illustrating a configuration of the spatial-direction prediction vector generating section 191. The spatial-direction prediction vector generating section 191 includes a spatial-direction motion vector extracting section 191a and a spatial-direction vector prediction calculating section 191b (see Fig. 3).

The spatial-direction vector prediction calculating section 191b includes a first calculating section 191b1, a second calculating section 191b2, a third calculating section 191b3, and a first selecting section 191b4 (see Fig. 3).

Upon receipt of the motion vector group #14c, the spatial-direction prediction vector generating section 191 generates a spatial-direction prediction vector #191.

The spatial-direction motion vector extracting section 191 a extracts, from the motion vector group #14c, (i) a motion vector assigned to a partition adjacent to a left side of the target partition, (ii) a motion vector assigned to a partition adjacent to an upper side of the target partition, and (iii) a motion vector assigned to a partition adjacent to (a) the partition which is adjacent to the left side of the target partition or (b) the partition which is adjacent to the upper side of the target partition. The motion vectors thus extracted constitute a motion vector group #191a, and the motion vector group #191a is supplied to the spatial-direction prediction vector calculating section 191b.

The spatial-direction prediction vector calculating section 191b calculates, based on the motion vector group #191a, a candidate (hereinafter, referred to as "candidate prediction vector") for a prediction vector which is to be assigned to the target partition. In a case where, for example, at least two partitions are adjacent to the target partition, i.e., first at least one partition is adjacent to the left side of the target partition and second at least one partition is adjacent to the upper side of the target partition, the spatial-direction prediction vector calculating section 191b calculates, by carrying out an average calculating process, a median calculating process, or a combination of the average calculating process and the median calculating process, a plurality of candidate prediction vectors based on motion vectors assigned to (i) respective of the at least two partitions or (ii) respective of the at least two partitions and a partition adjacent to one of the at least two partitions. Furthermore, the spatial-direction prediction vector calculating section 191b selects one (1) candidate prediction vector out of the plurality of candidate prediction vectors, and outputs, as the spatial-direction prediction vector #191, a selected one (1) candidate prediction vector.

### (Operation of Spatial-direction Prediction Vector Calculating Section 191b)

The following description discusses how the spatial-direction prediction vector calculating section 191b specifically operates, with reference to (a) through (f) of Fig. 4.

Fig. 4 is a view for explaining how the spatial-direction prediction vector calculating section 191b operates, in a case where at least one partition is adjacent to the left side of the target partition and at least one partition is adjacent to the upper side of the target partition. (a) and (b) of Fig. 4 illustrate a case where two partitions are adjacent to the left side of the target partition and two partitions are adjacent to the upper side of the target partition. (c) and (d) of Fig. 4 illustrate a case where (i) a macroblock made up of 16 × 16 pixels is equally divided into upper and lower target partitions, (ii) one (1) partition is adjacent to a left side of the macroblock, and (iii) two partitions are adjacent to an upper side of the macroblock. (e) of Fig. 4 illustrates a case where (i) a macroblock made up of 16 × 16 pixels is equally divided into right and left target partitions, (ii) two partitions are adjacent to a left side of the macroblock, and (iii) two partitions are adjacent to an upper side of the macroblock. (f) of Fig. 4 illustrates a case where (i) a macroblock made up of 16 × 16 pixels is equally divided into right and left target partitions, (ii) four partitions are adjacent to a left side of the macroblock, and (iii) three partitions are adjacent to an upper side of the macroblock.

### (Target Partition Having Size Other Than 16 × 8 Pixels and 8 × 16 Pixels)

The following description will discuss how each section of the spatial-direction prediction vector calculating section 191b operates, in a case where the target partition has a size other than 16 × 8 pixels and 8 × 16 pixels.

In a case where (i) first at least one partition is adjacent to the left side of the target partition and second at least one partition is adjacent to the upper side of the target partition and (ii) the total number of the first at least one partition and the second at least one partition is an odd number, the first calculating section 191b2 sets, to a candidate prediction vector #191b1 which is to be assigned to the target partition, a median of (i) a motion vector assigned to a partition, of the first at least one partition and the second at least one partition, whose side is adjacent to the target partition and is a longest side of the first at least one partition and the second at least one partition, (ii) motion vectors assigned to respective of the first at least one partition and the second at least one partition, and (iii) a motion vector assigned to a partition, which is adjacent to a right side of a rightmost one of the second at least one partition. Alternatively, in a case where the total number of the first at least one partition and the second at least one partition is an even number, the first calculating section 191b1 sets, to a candidate prediction vector #191b1 which is to be assigned to the target partition, a median of (i) motion vectors assigned to respective of the first at least one partition and the second at least one partition and (ii) a motion vector assigned to a partition, which is adjacent to a right side of a rightmost one of the second at least one partition.

Specifically, in a case where, for example, (i) a partition a1 and a partition a2 are adjacent to the left side of the target partition and (ii) a partition b1 and a partition b2 are adjacent to the upper side of the target partition (see (a) of Fig. 4), the first calculating section 191b1 sets, to a candidate prediction vector #191b1 which is to be assigned to the target partition, a median of motion vectors assigned to respective of (a) the partition a1, (b) the partition a2, (c) the partition b1, (d) the partition b2, and (e) a partition b3 which is adjacent to a right side of the partition b2.

Here, the term "median" means a medium value of elements, which medium value is obtained by an arithmetic operation. "Median of vectors" means a vector having (i) a medium value of first components of the respective vectors and (ii) a medium value of second components of the respective vectors.

In the case above shown in (a) of Fig. 4, in a case where (i) a motion vector assigned to a partition ai (i = 1, 2) is indicated by (MVaix, MVaiy) and (ii) a motion vector assigned to a partition bj (j = 1, 2, 3) is indicated by (MVbjx, MVbjy), the candidate prediction vector #191b1 (PMV1x, PMV1y) can be found as follows: PMV1x = median (MVa1x, MVa2x, MVb1x, MVb2x, MVb3x); and PMV1y = median (MVa1y, MVa2y, MVb1y, MVb2y, MVb3y), where "median (...)" indicates a medium value of the parenthesized elements.

In a case where, for example, (i) a partition a1' and a partition a2' are adjacent to the left side of the target partition, (ii) a partition b1' is adjacent to the upper side of the target partition, and (iii) a partition whose side is adjacent to the target partition and is a longest side is the partition b1', the first calculating section 191b1 sets, to a candidate prediction vector #191b1, a median of motion vectors assigned to respective of (a) the partition a1', (b) the partition a2', (c) the partition b1', (d) the partition b1', and (e) a partition b3' adjacent to a right side of the partition b1'.

In a case where (i) a motion vector assigned to a partition ai' (i = 1, 2) is indicated by (MVaix', MVaiy') and (ii) a motion vector assigned to a partition bj' (j = 1, 3) is indicated by (MVbjx', MVbjy'), the candidate prediction vector #191b1 (PMV1x, PMV1y) can be found as follows: PMV1x = median (MVa1x', MVa2x', MVb1x', MVb1x', MVb3x'); and PMV1y = median (MVa1y', MVa2y', MVb1y', MVb1y', MVb3y').

On the other hand, in a case where first at least one partition is adjacent to the left side of the target partition and second at least one partition is adjacent to the upper side of the target partition, the second calculating section 191b2 sets, to a candidate prediction vector #191b2 which is to be assigned to the target partition, a median of (i) an average of at least one motion vector assigned to respective of the first at least one partition, (ii) an average of at least one motion vector assigned to respective of the second at least one partition, and (iii) a motion vector assigned to a partition, which is adjacent to a right side of a rightmost one of the second at least one partition.

For example, in the case as shown in (b) of Fig. 4, the second calculating section 191b2 sets, to a candidate prediction vector #191b2 which is to be assigned to the target partition, a median of (i) an average of motion vectors assigned to respective of the partition a1 and the partition a2, (ii) an average of motion vectors assigned to respective of the partition b1 and the partition b2, and (iii) a motion vector assigned to the partition b3.

By using the early used symbols, the candidate prediction vector #191b2 (PMV2x, PMV2y) can be found as follows: PMV2x = median ((MVa1x + MVa2x)/2, (MVb1x + MVb2x)/2, MVb3x), and PMV2y = median ((MVa1y + MVa2y)/2, (MVb1y + MVb2y)/2, MVb3y).

In a case where (i) first at least one partition is adjacent to the left side of the target partition and (ii) second at least one partition is adjacent to the upper side of the target partition, the third calculating section 191b3 sets an average of motion vectors, which are assigned to respective of the first at least one partition and the second at least one partition, to a candidate prediction vector #191b3 which is to be assigned to the target partition.

In the case, for example, illustrated in (a) and (b) of Fig. 4, the candidate prediction vector #191b3 (PMV3x, PMV3y), calculated by the third calculating section 191b3, can be found, by using the early used symbols, as follows: PMV3x = (MVa1x + MVa2x + MVb1x + MVb2x)/4, and PMV3y = (MVa1y + MVa2y + MVb1y + MVb2y)/4.

Note that the candidate prediction vector #191b3 can be an average of (i) motion vectors which are assigned to respective of first at least one partition adjacent to the left side of the target partition and second at least one partition adjacent to the upper side of the target partition and (ii) a motion vector assigned to a partition, which is adjacent to a right side of a rightmost one of the second at least one partition. In a case such as illustrated in (a) and (b) of Fig. 4, a candidate prediction vector #191b3 (PMV3x, PMV3y) can be found by the third calculating section 191b3 as follows: PMV3x = (MVa1x + MVa2x + MVb1x + MVb2x + MVb3x)/5, and PMV3y = (MVa1y + MVa2y + MVb1y + MVb2y + MVb3y)/5.

The first selecting section 191b4 selects one of the candidate prediction vector #191b1, the candidate prediction vector #191b2, and the candidate prediction vector #191b3, and then outputs, as the spatial-direction prediction vector #191, a selected one of the candidate prediction vectors #191b1, #191b2, and #191b3.

Specifically, in a case where variation of motion vectors, which are assigned to respective of (i) first at least one partition adjacent to the left side of the target partition, (ii) second at least one partition adjacent to the upper side of the target partition, and (iii) a partition adjacent to a right side of a rightmost one of the second at least one partition, is equal to or smaller than a predetermined first threshold, the first selecting section 191b4 outputs the candidate prediction vector #191b3 as the spatial-direction prediction vector #191. Whereas, in a case where the variation is larger than the first threshold, the first selecting section 191b4 outputs, as the spatial-direction prediction vector #191, the candidate prediction vector #191b1 or the candidate prediction vector #191b2.

Note that the "variation" can be defined by, for example, a variance, a standard deviation, or a difference between an average and a value farthest from the average. However, the present embodiment is not limited to the definitions above, and therefore the "variation" can be defined otherwise.

Note that the first selecting section 191b4 can be alternatively configured as follows: that is, (i) in a case where the variation is equal to or smaller than a predetermined second threshold, the first selecting section 191b4 outputs the candidate prediction vector #191b3 as the spatial-direction prediction vector #191; (ii) in a case where the variation (a) is larger than the second threshold and (b) is equal to or smaller than a third threshold, which is larger than the second threshold, the first selecting section 191b4 outputs, as the spatial-direction prediction vector #191, the candidate prediction vector #191b1 or the candidate prediction vector #191b2; and (iii) in a case where the variation is larger than the third threshold, the first selecting section 191b4 outputs a zero vector as the spatial-direction prediction vector #191.

Which one of the candidate prediction vector #191b1 and the candidate prediction vector #191b2 should be outputted as the spatial-direction prediction vector #191 by the first selecting section 191b4, can be predetermined for each frame, for each sequence, for each picture, or for each slice.

Alternatively, the first selecting section 191b4 can output, as the spatial-direction prediction vector #191, one of the candidate prediction vector #191b1 and the candidate prediction vector #191b2, whichever is higher in encoding efficiency. Here, the candidate prediction vector which is higher in encoding efficiency indicates, for example, a candidate prediction vector which has higher efficiency in view of a rate-distortion characteristic.

Each of (i) the average of the motion vectors which is used to calculate the candidate prediction vector #191b2 and (ii) the average of the motion vectors which is used to calculate the candidate prediction vector #191b3 can be a weighted average in which the motion vectors are weighted by lengths of the sides of the respective partitions, to which the motion vectors are assigned and which are adjacent to the target partition. By using such a weighted average, it is possible to calculate a candidate prediction vector more accurately, that is, it is possible to calculate a candidate prediction vector which is more similar to the motion vector assigned to the target partition.

### (Target Partition Having Size of 16 x 8 Pixels)

In a case where the target partition has a size of 16 × 8 pixels, i.e., the target partition is made up of 16 pixels arranged in a horizontal direction and 8 pixels arranged in a vertical direction or in a case where the target partition has a size of 8 × 16 pixels, i.e., the target partition is made up of 8 pixels arranged in a horizontal direction and 16 pixels arranged in a vertical direction, the spatial-direction prediction vector calculating section 191b operates in a manner different from that above described.

The following description will discuss how each section of the spatial-direction prediction vector calculating section 191b operate in a case where the target partition has a size of 16 × 8 pixels.

In a case where (i) the target partition is an upper one of two partitions, which are obtained by evenly dividing a partition having a size of 16 × 16 pixels into upper and lower partitions, (ii) first at least one partition is adjacent to an upper side of the target partition, (iii) second at least one partition is adjacent to a left side of the target partition, and (iv) the total number of the first at least one partition and the second at least one partition is an even number, the first calculating section 191b1 sets, to a candidate prediction vector #191b1 which is to be assigned to the target partition, a median of (i) motion vectors assigned to respective of the first at least one partition and the second at least one partition and (ii) a motion vector assigned to a partition, of the first at least one partition and the second at least one partition, whose side is adjacent to the target partition and is a longest side of the first at least one partition and the second at least one partition. In a case where (i) the target partition is the upper partition (ii) first at least one partition is adjacent to the upper side of the target partition, (iii) second at least one partition is adjacent to the left side of the target partition, and (iv) the total number of the first at least one partition and the second at least one partition is an odd number, the first calculating section 191b2 sets, to a candidate prediction vector #191b1 which is to be assigned to the target partition, a median of motion vectors assigned to respective of the first at least one partition and the second at least one partition.

In a case where (i) the target partition is a lower one of the two partitions and (ii) one (1) partition is adjacent to the left side of the target partition, the first calculating section 191b1 sets a motion vector, which is assigned to the one (1) partition, to a candidate prediction vector #191b1. In a case where (i) the target partition is the lower partition and (ii) a plurality of partitions are adjacent to the left side of the target partition, the first calculating section 191b1 sets, to a candidate prediction vector #191b1 which is to be assigned to the target partition, an average of motion vectors which are assigned to the respective plurality of partitions.

In a case where, for example, (i) the target partition is one of upper and lower partitions (hereinafter, the upper partition is referred to as "partition X1" and the lower partition is referred to as "partition X2") which are obtained by evenly dividing a macroblock having a size of 16 × 16 pixels (see (c) of Fig. 4) and (ii) a partition a is adjacent to a left side of the macroblock and a partition b1 and a partition b2 are adjacent to an upper side of the macroblock, the first calculating section 191b1 sets, to a candidate prediction vector #191b1 which is to be assigned to the partition X1, a median of motion vectors assigned to respective of the partition b1, the partition b2, and the partition a.

The first calculating section 191b1 further sets the motion vector, which is assigned to the partition a, to a candidate prediction vector #191b1 which is to be assigned to the partition X2.

On the other hand, in a case where (i) the target partition is an upper one of two partitions, which are obtained by evenly dividing a partition having a size of 16 × 16 pixels into upper and lower partitions and (ii) a plurality of partitions are adjacent to the upper side of the target partition, the second calculating section 191b2 sets an average of motion vectors, which are assigned to the respective plurality of partitions, to a candidate prediction vector #191b2 which is to be assigned to the target partition. In a case where (i) the target partition is an lower one of two partitions, which are obtained by evenly dividing a partition having a size of 16 × 16 pixels into upper and lower partitions and (ii) one (1) partition is adjacent to the left side of the target partition, the second calculating section 191b2 sets a motion vector, which is assigned to the one (1) partition, to a candidate prediction vector #191b2 which is to be assigned to the target partition. In a case where (i) the target partition is the lower partition and (ii) a plurality of partitions are adjacent to the left side of the target partition, the second calculating section 191b2 sets an average of motion vectors, which are assigned to the respective plurality of partitions, to a candidate prediction vector #191b2 which is to be assigned to the target partition.

In the case, for example, such as illustrated in (d) of Fig. 4, the second calculating section 191b2 sets, to a candidate prediction vector #191b2 which is to be assigned to the partition X1, an average of motion vectors which are assigned to the respective partitions b1 and b2. The second calculating section 191b2 further sets a motion vector, which is assigned to the partition a, to a candidate prediction vector #191b2 which is to be assigned to the partition X2.

The first selecting section 191b4 outputs, as a spatial-direction prediction vector #191 which is to be assigned to the partition X1, one of (i) the candidate prediction vector #191b1, which is to be assigned to the partition X1 and (ii) the candidate prediction vector #191b2, which is to be assigned to the partition X1. Note that which of the candidate prediction vectors #191b1 and #191b2 is to be outputted is predetermined for each frame, for each sequence, for each picture, or for each slice. Alternatively, the first selecting section 191b4 can output, as the spatial-direction prediction vector #191 which is to be assigned to the partition X1, one of (i) the candidate prediction vector #191b1, which is to be assigned to the partition X1 and (ii) the candidate prediction vector #191b2, which is to be assigned to the partition X1, which one is higher in encoding efficiency than that of the other of the candidate prediction vectors #191b and #191b2. The same applies to a spatial-direction prediction vector #191 which is to be assigned to the partition X2.

The first selecting section 191b4 can be configured as follows: that is, (i) in a case where variation of motion vectors, which are assigned to respective partitions adjacent to the upper side of the partition X1, is equal to or smaller than a predetermined threshold, the first selecting section 191b4 sets the candidate prediction vector #191b2 to the spatial-direction prediction vector #191, whereas (ii) in a case where the variation is larger than the predetermined threshold, the first selecting section 191b4 sets the candidate prediction vector #191b1 to the spatial-direction prediction vector #191.

Note that, in the case where the target partition has the size of 16 × 8 pixels, the third calculating section 191b3 can set, to a candidate prediction vector #191b3 which is to be assigned to the target partition, an average of motion vectors which are assigned to respective of (i) first at least one partition adjacent to the left side of the target partition and (ii) second at least one partition adjacent to the upper side of the target partition, as with the early described case where the target partition has the size other than 16 × 8 pixels and 8 × 16 pixels.

In a case such as illustrated in (c) of Fig. 4, the third calculating section 191b3 can set, to a candidate prediction vector #191b3 which is to be assigned to the partition X1, an average of motion vectors which are assigned to respective of the partition a, the partition b1, and the partition b2. In such a case, it is possible that the first selecting section 191b4 selects one of the candidate prediction vector #191b1, the candidate prediction vector #191b2, and the candidate prediction vector #191b3, and then outputs, as the spatial-direction prediction vector #191, a selected one of the candidate prediction vectors #191b1, #191b2, and #191b3.

### (Target Partition Having Size of 8 × 16 Pixels)

In a case where the target partition has a size of 8 × 16 pixels, each section of the spatial-direction prediction vector calculating section 191b operates in a manner similar to that in the case where the target partition has the size of 16 × 8 pixels.

Specifically, in a case where (i) the target partition is a left one of two partitions, which are obtained by evenly dividing a partition having a size of 16 × 16 pixels into right and left partitions, (ii) first at least one partition is adjacent to an upper side of the target partition, (iii) second at least one partition is adjacent to a left side of the target partition, and (iv) the total number of the first at least one partition and the second at least one partition is an even number, the first calculating section 191b1 sets, to a candidate prediction vector #191b1 which is to be assigned to the target partition, a median of (i) motion vectors assigned to respective of the first at least one partition and the second at least one partition and (ii) a motion vector assigned to a partition, of the first at least one partition and the second at least one partition, whose side is adjacent to the target partition and is a longest side of the first at least one partition and the second at least one partition. In a case where (i) the target partition is the left partition (ii) first at least one partition is adjacent to the upper side of the target partition, (iii) second at least one partition is adjacent to the left side of the target partition, and (iv) the total number of the first at least one partition and the second at least one partition is an odd number, the first calculating section 191b1 sets, to a candidate prediction vector #191b1 which is to be assigned to the target partition, a median of motion vectors assigned to respective of the first at least one partition and the second at least one partition. In a case where the target partition is a right one of two partitions, which are obtained by evenly dividing a partition having a size of 16 × 16 pixels into right and left partitions, the first calculating section 191b1 sets, to a candidate prediction vector #191b1 which is to be assigned to the target partition, a motion vector assigned to a partition adjacent to a right side of a rightmost one of at least one partition which is adjacent to the upper side of the target partition.

In a case where, for example, (i) the target partition is one of left and right partitions (hereinafter, the left partition is referred to as "partition X3" and the right partition is referred to as "partition X4") which are obtained by evenly dividing a macroblock having a size of 16 × 16 pixels (see (e) of Fig. 4) and (ii) a partition a1 and a partition a2 are adjacent to a left side of the partition X3 and a partition b1 is adjacent to an upper side of the partition X3, the first calculating section 191b1 sets, to a candidate prediction vector #191b1 which is to be assigned to the partition X3, a median of motion vectors assigned to respective of the partition a1, the partition a2, and the partition b1.

The first calculating section 191b1 further sets, to a candidate prediction vector #191b1 which is to be assigned to the partition X4, a motion vector assigned to a partition c, which is adjacent to a right side of a partition b2 adjacent to an upper side of the partition X4.

On the other hand, in a case where (i) the target partition is a left one of two partitions, which are obtained by evenly dividing a partition having a size of 16 × 16 pixels into right and left partitions, and (ii) a plurality of partitions are adjacent to the left side of the target partition, the second calculating section 191b2 sets an average of motion vectors, which are assigned to the respective plurality of partitions, to a candidate prediction vector #191b2 which is to be assigned to the target partition. In a case where the target partition is a right one of two partitions, which are obtained by evenly dividing a partition having a size of 16 × 16 pixels into right and left partitions, the second calculating section 191b2 sets, to a candidate prediction vector #191b2 which is to be assigned to the target partition, a motion vector which is assigned to a partition adjacent to a right side of a rightmost one of at least one partition which is adjacent to the upper side of the target partition.

For example, in a case where partitions a1 through a4 are adjacent to the left side of the partition X3 (see (f) of Fig. 4), the second calculating section 191b2 sets, to a candidate prediction vector #191b2 which is to be assigned to the partition X3, an average of motion vectors which are assigned to respective of the partitions a1 through a4. The second calculating section 191b2 further sets, to a candidate prediction vector #191b2 which is to be assigned to the partition X2, a motion vector which is assigned to a partition c adjacent to a right side of a rightmost one of partitions which are adjacent to an upper side of the partition X4.

In the case where the target partition has the size of 8 × 16 pixels, the first selecting section 191b4 operates in a manner identical with that in the case where the target partition has the size of 16 × 8 pixels.

Note that, in the case where the target partition has the size of 8 × 16 pixels or 16 × 8 pixels, each of (i) the average of the motion vectors which is used to calculate the candidate prediction vector #191b2 and (ii) the average of the motion vectors which is used to calculate the candidate prediction vector #191b3 can be a weighted average in which the motion vectors are weighted by lengths of the respective sides of the respective partitions, to which the motion vectors are assigned and which are adjacent to the target partition. By using such a weighted average, it is possible to calculate a candidate prediction vector more accurately.

The following description will discuss how the spatial-direction prediction vector calculating section 191b operates, in a case where partitions are adjacent to respective of a left side and an upper side of a target partition (see (a) through (d) of Fig. 5).

In a case where (i) a partition a, which has a size equal to or larger than that of the target partition, is adjacent to the left side of the target partition and (ii) a partition b, which has a size equal to or larger than that of the target partition, is adjacent to the upper side of the target partition (see (a) and (b) of Fig. 5), the spatial-direction prediction vector calculating section 191b sets, to a candidate prediction vector which is to be assigned to the target partition, a median of motion vectors assigned to respective of the partition a, the partition b, and a partition c which is adjacent to a right side of the partition b. Then, the spatial-direction prediction vector calculating section 191b outputs the candidate prediction vector as a spatial-direction prediction vector #191 which is to be assigned to the target partition.

Note that the spatial-direction prediction vector calculating section 191b can output, as the spatial-direction prediction vector #191, an average of the motion vectors assigned to respective of the partition a, the partition b, and the partition c. The average can be a weighted average in which the motion vectors are weighted by lengths of the sides of the respective partitions and which are adjacent to the target partition. Alternatively, the spatial-direction prediction vector calculating section 191b can select, based on variation of the motion vectors assigned to the respective partitions a through c, one of (i) the candidate prediction vector calculated by the use of the average of the motion vectors and (ii) the candidate prediction vector calculated by the use of the weighted average.

In a case where (i) the target partitions are respective of a partition X1 and a partition X2, which are obtained by evenly dividing a macroblock having a size of 16 × 16 pixels into upper and lower partitions and (ii) a partition a is adjacent to the left side of the macroblock and a partition b is adjacent to the upper side of the macroblock (see (c) of Fig. 5), the spatial-direction prediction vector calculating section 191b sets a motion vector, which is assigned to the partition b, to a candidate prediction vector which is to be assigned to the partition X1. Then, the spatial-direction prediction vector calculating section 191b outputs the candidate prediction vector as a spatial-direction prediction vector #191 which is to be assigned to the partition X1. The spatial-direction prediction vector calculating section 191b further sets a motion vector, which is assigned to the partition a, to a candidate prediction vector which is to be assigned to the partition X2, and then outputs the candidate prediction vector as a spatial-direction prediction vector #191 which is to be assigned to the partition X2.

In a case where (i) the target partitions are respective of a partition X3 and a partition X4, which are obtained by evenly dividing a macroblock having a size of 16 × 16 pixels into left and right partitions and (ii) a partition a is adjacent to the left side of the macroblock and a partition b is adjacent to the upper side of the macroblock (see (d) of Fig. 5), the spatial-direction prediction vector calculating section 191b sets a motion vector, which is assigned to the partition a, to a candidate prediction vector which is to be assigned to the partition X3. Then, the spatial-direction prediction vector calculating section 191b outputs the candidate prediction vector as a spatial-direction prediction vector #191 which is to be assigned to the partition X3.

Moreover, the spatial-direction prediction vector calculating section 191b (i) sets, to a candidate prediction vector which is to be assigned to the partition X4, a motion vector assigned to a partition c adjacent to a right side of the partition b which is adjacent to an upper side of the partition X4, and then (ii) outputs the candidate prediction vector as a spatial-direction prediction vector #191 which is to be assigned to the partition X4.

### (Temporal-direction Prediction vector Generating Section 192)

The following description will discuss the temporal-direction prediction vector generating section 192, with reference to Figs. 6 and 7. Fig. 6 is a block diagram illustrating a configuration of the temporal-direction prediction vector generating section 192. The temporal-direction prediction vector generating section 192 includes a temporal-direction motion vector extracting section 192a and a temporal-direction prediction vector calculating section 192b (see Fig. 6).

The temporal-direction prediction vector calculating section 192b includes a fourth calculating section 192b1, a fifth calculating section 192b2, and a second selecting section 192b3 (see Fig. 6).

The temporal-direction prediction vector generating section 192 generates a temporal-direction prediction vector #192 based on the motion vector group #14c.

The temporal-direction motion vector extracting section 192a extracts, from the motion vector group #14c, (i) a motion vector which is assigned to a collocated partition in a first frame which was encoded before a second frame containing the target partition is encoded, which collocated partition is a partition at the same location as the target partition and (ii) motion vectors assigned to respective partitions adjacent to the collocated partition. The motion vectors thus extracted by the temporal-direction motion vector extracting section 192a constitute a motion vector group #192a, and the motion vector group #192a is supplied to the temporal-direction prediction vector calculating section 192b.

The first frame, which was encoded before the second frame containing the target partition is encoded, intends to mean, specifically, a frame which (i) was encoded and decoded before a frame containing the target partition is encoded and (ii) has been stored in the buffer memory 14.

The temporal-direction prediction vector calculating section 192b calculates, based on the motion vector group #192a, candidate prediction vectors which are to be assigned to the target partition. The temporal-direction prediction vector calculating section 192b calculates, for example, a plurality of candidate prediction vectors, by carrying out (i) an average calculating process, (ii) an median calculating process, or (iii) a combined process of (i) and (ii) with respect to the motion vectors assigned to respective of (i) the collocated partition in the first frame and (ii) the partitions which are adjacent to the collocated partition. The temporal-direction prediction vector calculating section 192b further selects one of the plurality of candidate prediction vectors, and then outputs a selected one of the plurality of candidate prediction vectors as the temporal-direction prediction vector #192.

### (Operation of Temporal-direction Prediction Vector Calculating Section 192b)

The following description will specifically discuss, with reference to (a) and (b) of Fig. 7, how each section of the temporal-direction prediction vector calculating section 192b operates.

Fig. 7 is a drawing for describing how each section of the temporal-direction prediction vector calculating section 192b operates. (a) of Fig. 7 schematically illustrates a positional relation between a target partition and a collocated partition. (b) of Fig. 7 illustrates a plurality of partitions adjacent to the collocated partition.

The fourth calculating section 192b1 sets, to a candidate prediction vector which is to be assigned to the target partition, an average of (i) the motion vector assigned to the collocated partition in a first frame and (ii) the motion vectors assigned to respective partitions which are adjacent to the collocated partition.

Specifically, the fourth calculating section 192b1 sets, to a candidate prediction vector #192b1 which is to be assigned to a target partition A, an average of (i) a motion vector assigned to a collocated partition B in a frame F2 which was encoded before a frame F1 containing the target partition A is encoded, which collocated partition is a partition at the same location as the target partition A (see (a) of Fig. 7) and (ii) motion vectors assigned to respective of partitions a1 through a3, partitions b1 through b4, partitions c1 through c4, and partitions d1 through d3, all of which are adjacent to the collocated partition B (see (b) of Fig. 7).

In a case where the total number of the collocated partition and adjacent partitions, which are adjacent to the collocated partition, is an even number, the fifth calculating section 192b2 sets, to a candidate prediction vector which is to be assigned to the target partition, a median of (i) a motion vector assigned to a partition of the adjacent partitions whose side is adjacent to the target partition and is a longest side of the adjacent partitions and (ii) motion vectors assigned to respective of the collocated partition and the adjacent partitions. In a case where the total number of the collocated partition and the adjacent partitions is an odd number, the fifth calculating section 192b2 sets, to a candidate prediction vector which is to be assigned to the target partition, a median of (i) the motion vector assigned to the collocated partition and (ii) the motion vectors assigned to the respective adjacent partitions.

Specifically, in a case such as illustrated in (b) of Fig. 7, the fifth calculating section 192b2 sets, to a candidate prediction vector #192b2 which is to be assigned to the target partition A, a median of motion vectors which are assigned to respective of the collocated partition B, the partitions a1 through a3, the partitions b1 through b4, the partitions c1 through c4, and the partitions d1 through d3.

Note that, in the case where the total number of the collocated partition and the adjacent partitions is an even number, the fifth calculating section 192b2 can calculate a median by the use of the motion vector assigned to the collocated partition, instead of the motion vector assigned to the partition of the adjacent partitions whose side is adjacent to the target partition and is a longest side of the adjacent partitions.

The second selecting section 192b3 selects the candidate prediction vector #192b1 or the candidate prediction vector #192b2, and then outputs, as the spatial-direction prediction vector #191, a selected one of the candidate prediction vector #192b1 and the candidate prediction vector #192b2.

Specifically, in a case where variation of the motion vector assigned to the collocated partition and the motion vectors assigned to the respective adjacent partitions is equal to or smaller than a predetermined fourth threshold, the second selecting section 192b3 outputs the candidate prediction vector #192b1 as the temporal-direction prediction vector #192. Whereas, in a case where the variation is larger than the fourth threshold, the second selecting section 192b3 outputs the candidate prediction vector #192b2 as the temporal-direction prediction vector #192.

In the above description, the collocated partition B is at the same location as the target partition A. In general, however, a plurality of partitions may sometimes share a region in the frame F2 which region is the same as the region where the target partition A is located. In such a case, the collocated partition B can be defined by a partition group made up of such a plurality of partitions. Note that the foregoing processes are still applicable even to the case where the collocated partition B is defined by such a partition group.

The adjacent partitions can include a partition, which shares a vertex with the collocated partition. In a case illustrated in (b) of Fig. 7, the fourth calculating section 192b1 can set, to a candidate prediction vector #192b1 which is to be assigned to the target partition, an average of motion vectors assigned to respective of (i) the collocated partition B, (ii) partitions e1 through e4 each of which shares a corresponding vertex with the collocated partition B, (iii) the partitions a1 through a3, (iv) the partitions b1 through b4, (v) the partitions c1 through c4, and (vi) the partitions d1 through d3. The same applies to the fifth calculating section 192b2.

The second selecting section 191b3 can outputs, as the temporal-direction prediction vector #192, one of the candidate prediction vector #192b1 and the candidate prediction vector #192b2 whichever is higher in encoding efficiency.

Note that, the average of the motion vectors, which is used to calculate the candidate prediction vector # 192b2 and the candidate prediction vector #192b3, can be a weighted average in which the motion vectors are weighted by lengths of the sides of the respective adjacent partitions which are adjacent to the target partition. By using such a weighted average, it is possible to calculate a candidate prediction vector more accurately, that is, it is possible to calculate a candidate prediction vector which is more similar to the motion vector assigned to the target partition.

### (Spatio-temporal-direction Prediction Vector Generating Section 193)

The following description will discuss the spatio-temporal-direction prediction vector generating section 193 with reference to (a) of Fig. 5 and Fig. 8.

The spatio-temporal-direction prediction vector generating section 193 generates a spatio-temporal-direction prediction vector #193 based on the motion vector group #14c.

The spatio-temporal-direction prediction vector generating section 193 has a configuration substantially similar to that of the temporal-direction prediction vector generating section 192, except for the following features.

That is, the spatio-temporal-direction prediction vector generating section 193 calculates the spatio-temporal-direction prediction vector #193 by using a shifted-collocated partition C, instead of the collocated partition B used by the temporal-direction prediction vector generating section 192. The shifted-collocated partition C is a partition which (i) is in the frame F2 and (ii) is at the location moved from the collocated partition B by an amount corresponding to a candidate prediction vector MVd which is calculated based on motion vectors assigned to partitions adjacent to the target partition A and is to be assigned to the target partition A (see Fig. 8).

In a case where, for example, (i) a partition a is adjacent to the left side of the target partition A and (ii) a partition b is adjacent to the upper side of the target partition A (see (a) of Fig. 5), the candidate prediction vector MVd can be a median of motion vectors assigned to respective of the partition a, partition b, and a partition c which is adjacent to a right side of the partition b. In a case where (i) at least two partitions are adjacent to one of the left side and the upper side of the target partition and (ii) at least one partition is adjacent to the other of the left side and the upper side of the target partition, the candidate prediction vector MVd can be, for example, one of the foregoing candidate prediction vectors #191b1 through #191b3.

In a case where any of adjacent partitions, which are adjacent to the target partition, is an intra-predicted partition, it is preferable that the spatial-direction prediction vector generating section 191 generates candidate prediction vectors #191b1 through #191b3 by using the adjacent partitions excluding the intra-predicted partition. Similarly, in a case where any of adjacent partitions, which are adjacent to the collocated partition, is an intra-predicted partition, it is preferable that the temporal-direction prediction vector generating section 192 generates candidate prediction vectors #192b1 and # 192b2 by using the adjacent partitions excluding the intra-predicted partition. Similarly, in a case where any of adjacent partitions, which are adjacent to the shifted-collocated partition, is an intra-predicted partition, it is preferable that the spatio-temporal-direction prediction vector generating section 193 generates candidate prediction vectors #193b1 and # 193b2 by using the adjacent partitions excluding the intra-predicted partition.

### (Prediction Vector Selecting Section 194)

The following description will discuss the prediction vector selecting section 194.

The prediction vector selecting section 194 selects one of the spatial-direction prediction vector # 191, the temporal-direction prediction vector # 192, and the spatio-temporal-direction prediction vector # 193, and then outputs selected one of the prediction vectors # 191 through # 193 as a prediction vector # 194.

The prediction vector selecting section 194 receives the spatial-direction prediction vector #191, the temporal-direction prediction vector #192, and the spatio-temporal-direction prediction vector #193. Moreover, the prediction vector selecting section 194 receives (i) the candidate prediction vectors #191b1 through #191b3 calculated by the spatial-direction prediction vector generating section 191, (ii) the candidate prediction vectors #192b1 and #192b2 calculated by the temporal-direction prediction vector generating section 192, and (iii) candidate prediction vectors #193b1 and #193b2 which are calculated by the spatio-temporal-direction prediction vector generating section 193 and correspond to the candidate prediction vectors #192b1 and #192b2, respectively.

The prediction vector selecting section 194 compares (i) first variation of the candidate prediction vectors #191b1 and #191b2 and (ii) second variation of the candidate prediction vectors #192b1 and #192b2 so as to determine which one of the first and second variation is smaller variation. The prediction vector selecting section 194 selects a candidate prediction vector from one of the spatial-direction prediction vector #191 and the temporal-direction prediction vector #192, whichever is smaller in variation. Then, the prediction vector selecting section 194 outputs a selected candidate prediction vector as the prediction vector #194.

In a case where, for example, the variation of the candidate prediction vectors #191b1 and #191b2 is smaller than that of the candidate prediction vectors #192b1 and #192b2, the prediction vector selecting section 194 outputs the spatial-direction prediction vector #191 as the prediction vector #194.

In general, a prediction vector, selected out of the candidate prediction vectors whose variation is smaller, is more similar to a motion vector which is actually assigned to a target partition. In view of this, it is possible to output a more accurate prediction vector by using, as the prediction vector #194, a prediction vector selected from the candidate prediction vectors whose variation is smaller. Moreover, by thus selecting the prediction vector #194, it is possible for a video decoding device 2 (later described) to decode the encoded data #2 without transmitting a flag indicative of which prediction vector has been selected. It is therefore possible to improve the encoding efficiency by outputting the prediction vector #194 in the manner above described.

Note that the prediction vector selecting section 194 can select the prediction vector #194 from the candidate prediction vectors #191b1, #191b2, and #191b3, instead of the candidate prediction vectors #191b1 and #191b2.

The prediction vector selecting section 194 can output, as the prediction vector #194, one of the spatial-direction prediction vector #191 and the temporal-direction prediction vector #192 whichever is higher in encoding efficiency. In such a case, the prediction vector selecting section 194 outputs a flag #19b indicative of which one of the spatial-direction prediction vector #191 and the temporal-direction prediction vector #192 has been outputted as the prediction vector #194.

Alternatively, the prediction vector selecting section 194 can output, as the prediction vector #194, a predetermined one of the spatial-direction prediction vector #191 and the temporal-direction prediction vector #192.

The prediction vector selecting section 194 can output the prediction vector #194 as follows: that is, in a case where variation of an entire candidate prediction vector group made up of (a) the candidate prediction vectors #191b1 and #191b2 and (b) the candidate prediction vectors #192b1 and #192b2 is equal to or smaller than a predetermined fifth threshold, the prediction vector selecting section 194 outputs, as the prediction vector #194, one of the spatial-direction prediction vector #191 and the temporal-direction prediction vector #192, whichever is smaller in variation. Whereas, in a case where the variation of the entire candidate prediction vector group is larger than the predetermined fifth threshold, the prediction vector selecting section 194 (i) selects a prediction vector whose encoding efficiency is higher as the prediction vector #194 and then (ii) outputs a selected prediction vector as the prediction vector #194 together with the flag #19b indicative of which prediction vector has been selected.

Alternatively, in the case where the variation of the entire candidate prediction vector group is larger than the predetermined fifth threshold, the prediction vector selecting section 194 can output a zero vector as the candidate prediction vector #194. In general, in a case where the variation of the entire candidate prediction vector group is large, the encoding efficiency sometimes becomes lower in a case where a calculated prediction vector is used than in a case where a motion vector itself is encoded. It is possible to encode a motion vector itself which is assigned to the target partition, by outputting a zero vector as the candidate prediction vector #194 in the case where the variation of the entire prediction candidate vector group is larger than the predetermined fifth threshold. It is therefore possible to reduce a decrease in encoding efficiency.

Note that the prediction vector selecting section 194 can output the prediction vector #194 as follows: that is, in a case where the variation of the candidate prediction vectors #191b1 and #191b2 is equal to or smaller than a predetermined sixth threshold, the prediction vector selecting section 194 can output the spatial-direction prediction vector #191 as the prediction vector #194. On the other hand, in a case where (i) the variation of the candidate prediction vectors #191b1 and #191b2 is larger than the predetermined sixth threshold and (ii) the variation of the candidate prediction vectors #192b1 and #192b2 is equal to or smaller than a predetermined seventh threshold, the prediction vector selecting section 194 can output the temporal-direction prediction vector #192 as the prediction vector #194.

In general, it is possible to increase encoding efficiency in an area where a uniform motion is made, by using prediction vectors #194 which cause a small change between respective partitions. However, in a case where, for example, the spatial-direction prediction vector #191 and the temporal-direction prediction vector #192 are alternately selected for each of the partitions, prediction vectors change depending on the respective partitions. In order to avoid such a case as much as possible, the prediction vector #194 is selected in the described manner. That is, the spatial-direction prediction vector #191 is selected as the prediction vector # 194 more often than the temporal-direction prediction vector #192. This allows an increase in encoding efficiency. Note that it is of course possible to employ a configuration in which the temporal-direction prediction vector #192 is selected as the prediction vector #194 more often than the spatial-direction prediction vector #191.

The prediction vector selecting section 194 can select, as the prediction vector # 194, the spatial-direction prediction vector #191 or the spatio-temporal-direction prediction vector #193, by using the candidate prediction vectors #193b1 and #193b2 instead of the above described candidate prediction vectors #192b1 and #192b2.

It is possible to predetermine which ones of (i) the candidate prediction vectors #192b1 and #192b2 and (ii) the candidate prediction vectors #193b1 and #193b2 are to be used. Alternatively, which ones of (i) the candidate prediction vectors #192b1 and #192b2 and (ii) the candidate prediction vectors #193b1 and #193b2 are to be used can be determined for a predetermined unit such as for each sequence, for each frame, or for each slice.

In general, the temporal-direction prediction vector #192 is more suitable for an area where a motion vector is smaller, i.e., an area where a motion is small, whereas the spatio-temporal-direction prediction vector #193 is more suitable for an area where a motion vector is larger, i.e., an area where a motion is large.

The prediction vector selecting section 194 can output the prediction vector #194 as follows: that is, in a case where variation of an entire prediction vector group made up of the spatial-direction prediction vector #191, the temporal-direction prediction vector #192, and the spatio-temporal-direction prediction vector #193 is equal to or smaller than a predetermined eighth threshold, the prediction vector selecting section 194 can output, as the prediction vector #194, (i) an average of the spatial-direction prediction vector #191, the temporal-direction prediction vector #192, and the spatio-temporal-direction prediction vector #193 or (ii) the spatial-direction prediction vector #191.

In a case where the variation of the prediction vector group is larger than the predetermined eighth threshold and is equal to or smaller than a predetermined ninth threshold which is larger than the predetermined eighth threshold, the prediction vector selecting section 194 can output a median of the prediction vector group as the prediction vector #194. On the other hand, in a case where the variation of the prediction vector group is larger than the predetermined ninth threshold, the prediction vector selecting section 194 can output a zero vector as the prediction vector #194. Note that, alternatively, the prediction vector selecting section 194 can output a flag indicating that the prediction vector #194 is a zero vector, instead of outputting the zero vector itself as the prediction vector #194.

In a case where all partitions adjacent to the target partition are intra-predicted partitions, the prediction vector selecting section 194 preferably selects the temporal-direction prediction vector #192 as the prediction vector #194. In a case where all partitions adjacent to the collocated partition are intra-predicted partitions, the prediction vector selecting section 194 preferably selects the spatial-direction prediction vector #191 as the prediction vector #194.

The above described processes causes the subtracter 195 to generate a difference motion vector #19a based on a difference between the motion vector #17 assigned to the target partition and the prediction vector #194 which has been outputted by the prediction vector selecting section 194. Then, the subtracter 195 outputs the difference motion vector #19a thus generated.

Note that the present embodiment is not limited to a specific size of the target partition. The present embodiment is applicable to, for example, a target partition having a size of 16 × 16 pixels, 16 × 8 pixels, 8 × 16 pixels, 8 × 8 pixels, 8 × 4 pixels, 4 × 8 pixels, or 4 × 4 pixels. Moreover, the present embodiment is generally applicable to a target partition having a size of N × M pixels (each of N and M is a natural number).

In a case where the macroblock has a size larger than 16 × 16 pixels, e.g., 32 × 32 pixels or 64 × 64 pixels, the present embodiment is applicable to a target partition having a size larger than 16 × 16 pixels. In a case where, for example, the macroblock has a size of 64 × 64 pixels, the present embodiment is applicable to a target partition having a size of 64 × 64 pixels, 64 × 32 pixels, 32 × 64 pixels, 32 × 32 pixels, 32 × 16 pixels, 16 × 32 pixels, 16 × 16 pixels, 16 × 8 pixels, 8 × 16 pixels, 8 × 8 pixels, 8 × 4 pixels, 4 × 8 pixels, or 4 × 4 pixels.

### (Video Decoding Device 2)

The following description will discuss a video decoding device 2 of the present embodiment, with reference to Fig. 9. Fig. 9 is a block diagram illustrating a configuration of the video decoding device 2.

The video decoding device 2 includes a variable-length-code decoding section 23, a motion vector reconstructing section 24, a buffer memory 25, a predictive image generating section 26, an intra-predictive image generating section 27, a prediction mode determining section 28, an inverse-quantizing and inverse-transform section 29, and an adder 30 (see Fig. 9).

The video decoding device 2 sequentially outputs output images #3 based on respective pieces of encoded data #2.

The variable-length-code decoding section 23 carries out variable-length decoding with respect to the encoded data #2 so as to output a difference motion vector #23a, prediction mode information #23b, and quantized prediction residual data #23c.

In a case where the encoded data #2 contains the flag #19b, the variable-length-code decoding section 23 supplies the flag #19b to the motion vector reconstructing section 24.

The motion vector reconstructing section 24 decodes the difference motion vector #23a based on (i) variation of motion vectors assigned to respective partitions adjacent to a target partition, (ii) variation of motion vectors assigned to respective partitions adjacent to a collocated partition which is in a previous frame and is at the same location as the target partition, (iii) variation of motion vectors assigned to respective partitions adjacent to a shifted-collocated partition which is in the previous frame and is at the location moved from the collocated partition by an amount corresponding to a candidate prediction vector which is calculated based on motion vectors assigned to respective partitions adjacent to the target partition or (iv) variation of candidate prediction vectors which are calculated based on the above motion vectors and are to be assigned to the target partition.

The motion vector reconstructing section 24 decodes a motion vector #24, which is to be assigned to the target partition, based on the difference motion vector #23a and a motion vector #25a which has been decoded and stored in the buffer memory 25. A configuration of the motion vector reconstructing section 24 will be described later in detail, and is therefore be omitted here.

A decoded image #3 (later described), the motion vector #24, and the prediction mode information #23b are stored in the buffer memory 25.

The predictive image generating section 26 generates an inter-predictive image #26 based on (i) a motion vector #25c, which has been (a) decoded by the motion vector reconstructing section 24, (b) stored in the buffer memory 25, and then (c) supplied to the predictive image generating section 26 and (ii) the decoded image #3 which has been stored in the buffer memory 25. Note that the motion vector #25c includes a motion vector identical with the motion vector #24.

The intra-predictive image generating section 27 generates an intra-predictive image #27 based on a local decoded image #25b of an image. The image is also for a target macroblock, and the local decoded image #25b is stored in the buffer memory 25.

The prediction mode determining section 28 selects the intra-predictive image #27 or the inter-predictive image #26 based on the prediction mode information #23b, and then outputs a selected one of the intra-predictive image #27 and the inter-predictive image #26 as a predictive image #28.

The inverse-quantizing and inverse-transform section 29 carries out inverse quantization and an inverse DCT with respect to the quantized prediction residual data #23c so as to generate and output a prediction residual #29.

The adder 30 adds the prediction residual #29 and the predictive image #28 so as to generate a decoded image #3. The decoded image #3 thus generated is stored in the buffer memory 25.

### (Motion Vector Reconstructing Section 24)

The following description will discuss a configuration of the motion vector reconstructing section 24 with reference to Figs. 10 and 11. The motion vector reconstructing section 24 includes a prediction vector generating section 196 and an adder 241 (see Fig. 10). Note that the prediction vector generating section 196 has a configuration identical with the prediction vector generating section 196 of the motion vector redundancy reducing section 19 included in the video encoding device 1. That is, the prediction vector generating section 196 includes a spatial-direction prediction vector generating section 191, a temporal-direction prediction vector generating section 192, a spatio-temporal-direction prediction vector generating section 193, and a prediction vector selecting section 194.

The prediction vector generating section 196 of the motion vector reconstructing section 24 receives the motion vector #25a, which is stored in the buffer memory 25, instead of the motion vector group #14c supplied to the prediction vector generating section 196 of the motion vector redundancy reducing section 19.

How the spatial-direction prediction vector generating section 191, the temporal-direction prediction vector generating section 192, the spatio-temporal-direction prediction vector generating section 193, and the prediction vector selecting section 194 in the motion vector reconstructing section 24 operate has already been early described in detail. Therefore, descriptions regarding how these sections operate are omitted here.

The adder 241 generates the motion vector #24 by adding the difference motion vector #23a and the prediction vector #194 which has been outputted by the prediction vector selecting section 194. Then, the adder 241 outputs the motion vector #24 thus generated.

In a case where the encoded data #2 contains the flag #19b, the motion vector reconstructing section 24 can include, instead of the prediction vector generating section 196, a prediction vector generating section 196' which has a prediction vector selecting section 194' instead of the prediction vector selecting section 194 (see Fig. 11). Here, the prediction vector selecting section 194' determines the prediction vector #194 based on the flag #19b.

Since the motion vector reconstructing section 24 is thus configured, it is possible to determine the prediction vector #194 based on the flag #19b, even in the case where the encoded data #2 contains the flag #19b.

### (Configuration of Encoded Data #2)

The following description will discuss, with reference to Fig. 12, the encoded data #2 which has been generated by the use of the video encoding device 1.

Fig. 12 is a view illustrating a bit stream #MB for each macroblock in the encoded data #2 generated by the use of the video encoding device 1. The bit stream #MB contains block mode information Mod, index information Idxi, a flag #19b, and motion vector information MVi (i = 1 to N) (see Fig. 12). Here, "N" indicates the number of partitions constituting a macroblock.

The block mode information Mod contains information such as prediction mode information #18b and partition division information, which relate to the macroblock.

The index information Idxi contains at least one reference picture number which is to be referred to by a corresponding one of the partitions when motion compensation is carried out. Note that the flag #19b is to be contained in the bit stream #MB only in a case where the flag #19b is necessary for selecting a prediction vector assigned to a corresponding one of the partitions.

The motion vector information MVi contains difference motion vectors #19a associated with the respective partitions.

### (Additional Remarks 1)

In the video encoding device of the present invention, it is preferable that: in a case where the first variation is smaller than the second variation, the selecting means assigns, to the target partition, a prediction vector in the first prediction vector group calculated by referring to the first motion vector group; and in a case where the second variation is smaller than the first variation, the selecting means assigns, to the target partition, a prediction vector in the second prediction vector group calculated by referring to the second motion vector group.

With the configuration, it is possible to assign, to the target partition, a prediction vector belonging to a prediction vector group calculated by referring to one of the first motion vector group and the second motion vector group whichever is smaller in variation. This further brings about an effect of assigning a prediction vector higher in encoding efficiency.

It is preferable that, in a case where (i) both the first variation and the second variation are smaller than a predetermined threshold and (ii) the first variation is smaller than the second variation, the selecting means assigns, to the target partition, a prediction vector in the first prediction vector group calculated by referring to the first motion vector group; in a case where (i) both the first variation and the second variation are smaller than the predetermined threshold and (ii) the second variation is smaller than the first variation, the selecting means assigns, to the target partition, a prediction vector in the second prediction vector group calculated by referring to the second motion vector group; and otherwise, the selecting means assigns, to the target partition, a prediction vector in the first prediction vector group or in the second prediction vector group, and carries out encoding of a flag indicative of the prediction vector which has been assigned to the target partition.

This further brings about an effect of assigning a prediction vector to the target partition in a manner as follows: that is, in a case where (i) both the first variation and the second variation are smaller than a predetermined threshold and (ii) the first variation is smaller than the second variation, the selecting means assigns, to the target partition, a prediction vector in the first prediction vector group calculated by referring to the first motion vector group; in a case where (i) both the first variation and the second variation are smaller than the predetermined threshold and (ii) the second variation is smaller than the first variation, the selecting means assigns, to the target partition, a prediction vector in the second prediction vector group calculated by referring to the second motion vector group; and in a case where both the first variation and the second variation are equal to or larger than the predetermined threshold, the selecting means assigns, to the target partition, a prediction vector in the first prediction vector group or in the second prediction vector group while specifying a flag. According to the configuration, in a case where the first variation and the second variation are small (i.e., prediction is more accurate), no flag is used, whereas a flag is used only in a case where the first variation and the second variation are large (i.e., prediction is less accurate). This allows a further reduction in amount of flags while maintaining accuracy in prediction, as compared to a case where all the prediction vectors are specified by respective flags.

It is preferable that, in a case where (i) both the first variation and the second variation are smaller than a predetermined threshold and (ii) the first variation is smaller than the second variation, the selecting means assigns, to the target partition, a prediction vector in the first prediction vector group calculated by referring to the first motion vector group; in a case where (i) both the first variation and the second variation are smaller than the predetermined threshold and (ii) the second variation is smaller than the first variation, the selecting means assigns, to the target partition, a prediction vector in the second prediction vector group calculated by referring to the second motion vector group; and otherwise, the selecting means assigns a zero vector to the target partition.

In general, as the variation of the motion vector group becomes larger, difference becomes larger between a calculated prediction vector and a motion vector which is actually assigned to the target partition. Moreover, use of a prediction vector, which is largely different from a motion vector actually assigned to the target partition, causes encoding efficiency to become lower than that obtained by using no prediction vector.

According to the configuration of the present invention, the zero vector is assigned to the target partition, in a case where the first variation and the second variation are equal to or larger than the predetermined threshold. This further brings about an effect of reducing a decrease in encoding efficiency.

In the video encoding device of the present invention, it is preferable that another second calculating means is provided instead of the second calculating means, and calculates a second prediction vector group, which are candidates for a prediction vector which is to be assigned to the target partition, by referring to a second motion vector group, the second motion vector group being made up of second motion vectors which are assigned to respective partitions located around a shifted-collocated partition which is in an encoded frame and is at the location moved from a collocated partition by an amount of a motion vector to be assigned to the target partition, the amount being estimated based on motion vectors assigned to respective encoded partitions located around the target partition, the collocated partition being at the same location as the target partition.

According to the configuration, the another second calculating means is provided, and calculates a second prediction vector group, which are candidates for a prediction vector which is to be assigned to the target partition, by referring to a second motion vector group, the second motion vector group being made up of second motion vectors which are assigned to respective partitions located around a shifted-collocated partition which is in an encoded frame and is at the location moved from a collocated partition by an amount of a motion vector to be assigned to the target partition, the amount being estimated based on motion vectors assigned to respective encoded partitions located around the target partition, the collocated partition being at the same location as the target partition. This further brings about an effect of assigning an accurate prediction vector to the target partition, even in a case where the target partition has a movement.

In the video decoding device of the present invention, it is preferable that, in a case where the first variation is smaller than the second variation, the selecting means assigns, to the target partition, a prediction vector in the first prediction vector group calculated by referring to the first motion vector group; and
in a case where the second variation is smaller than the first variation, the selecting means assigns, to the target partition, a prediction vector in the second prediction vector group calculated by referring to the second motion vector group.

With the configuration, it is possible to assign, to the target partition, a prediction vector belonging to a prediction vector group calculated by referring to one of the first motion vector group and the second motion vector group whichever is smaller in variation. This further brings about an effect of assigning a prediction vector without referring to any flag.

In the video decoding device of the present invention, it is preferable that, in a case where (i) both the first variation and the second variation are smaller than a predetermined threshold and (ii) the first variation is smaller than the second variation, the selecting means assigns, to the target partition, a prediction vector in the first prediction vector group calculated by referring to the first motion vector group; in a case where (i) both the first variation and the second variation are smaller than the predetermined threshold and (ii) the second variation is smaller than the first variation, the selecting means assigns, to the target partition, a prediction vector in the second prediction vector group calculated by referring to the second motion vector group; and otherwise, the selecting means assigns, to the target partition, a prediction vector in the first prediction vector group or in the second prediction vector group by referring to a flag contained in the encoded data.

According to the configuration, in a case where (i) both the first variation and the second variation are smaller than a predetermined threshold and (ii) the first variation is smaller than the second variation, the selecting means assigns, to the target partition, a prediction vector in the first prediction vector group calculated by referring to the first motion vector group; and in a case where (i) both the first variation and the second variation are smaller than the predetermined threshold and (ii) the second variation is smaller than the first variation, the selecting means assigns, to the target partition, a prediction vector in the second prediction vector group calculated by referring to the second motion vector group. This further brings about an effect of assigning a prediction vector to the target partition without referring to any flag. Moreover, the above configuration further brings about an effect as follows: that is, in a case where both the first variation and the second variation are equal to or larger than the predetermined threshold, the selecting means assigns, to the target partition, a prediction vector in the first prediction vector group or in the second prediction vector group by referring to a flag contained in the encoded data. According to the configuration, in a case where the first variation and the second variation are small (i.e., prediction is more accurate), no flag is used, whereas a flag is used only in a case where the first variation and the second variation are large (i.e., prediction is less accurate). This makes it possible to generate an accurate predictive image with a small amount of flags, as compared to a case where all the prediction vectors are specified by respective flags.

In the video decoding device of the present invention, it is preferable that, in a case where (i) both the first variation and the second variation are smaller than a predetermined threshold and (ii) the first variation is smaller than the second variation, the selecting means assigns, to the target partition, a prediction vector in the first prediction vector group calculated by referring to the first motion vector group; in a case where (i) both the first variation and the second variation are smaller than the predetermined threshold and (ii) the second variation is smaller than the first variation, the selecting means assigns, to the target partition, a prediction vector in the second prediction vector group calculated by referring to the second motion vector group, and otherwise, the selecting means assigns a zero vector to the target partition.

According to the configuration, the zero vector is assigned to the target partition, in a case where the first variation and the second variation are equal to or larger than the predetermined threshold. This further brings about an effect of assigning a prediction vector or a zero vector to the target partition without a decoder side referring to any flag.

In the video decoding device of the present invention, it is preferable that another second calculating means is provided instead of the second calculating means, and calculates a second prediction vector group, which are candidates for a prediction vector which is to be assigned to the target partition, by referring to a second motion vector group, the second motion vector group being made up of second motion vectors which are assigned to respective partitions located around a shifted-collocated partition which is in an encoded frame and is at the location moved from a collocated partition by an amount of a motion vector to be assigned to the target partition, the amount being estimated based on motion vectors assigned to respective encoded partitions located around the target partition, the collocated partition being at the same location as the target partition.

According to the configuration, a second prediction vector group, which are candidates for a prediction vector which is to be assigned to the target partition, is calculated by referring to a second motion vector group, the second motion vector group being made up of second motion vectors which are assigned to respective partitions located around a shifted-collocated partition which is in an encoded frame and is at the location moved from a collocated partition by an amount of a motion vector to be assigned to the target partition, the amount being estimated based on motion vectors assigned to respective encoded partitions located around the target partition, the collocated partition being at the same location as the target partition. This further brings about an effect of assigning an accurate prediction vector to the target partition, even in a case where the target partition has a movement.

### (Additional Remarks 2)

The present invention can be expressed, for example, as follows.
1.
   A video encoding device for encoding a video together with a difference vector between a prediction vector and a motion vector, which are assigned to each of a plurality of partitions obtained by dividing a frame constituting the video, the video encoding device including:
   first calculating means for calculating a first prediction vector group by referring to a first motion vector group, the first motion vector group being made up of first motion vectors assigned to respective encoded partitions which are located around a target partition in a target frame, and the first prediction vector group being made up of first prediction vectors which are candidates for a prediction vector which is to be assigned to the target partition;
   second calculating means for calculating a second prediction vector group by referring to a second motion vector group, the second motion vector group being made up of second motion vectors assigned to respective partitions which are located around a collocated partition in an encoded frame, the collocated partition at the same location as the target partition, and the second prediction vector group being made up of second prediction vectors which are candidates for the prediction vector which is to be assigned to the target partition; and
   selecting means for selecting a prediction vector to be assigned to the target partition, the selecting means determining the prediction vector to be assigned to the target partition from the first prediction vector group or from the second prediction vector group based on first variation of the first motion vectors in the first motion vector group and second variation of the second motion vectors in the second motion vector group.
2.
   The video encoding device as set forth in 1., wherein:
   in a case where the first variation is smaller than the second variation, the selecting means assigns, to the target partition, a prediction vector in the first prediction vector group calculated by referring to the first motion vector group; and
   in a case where the second variation is smaller than the first variation, the selecting means assigns, to the target partition, a prediction vector in the second prediction vector group calculated by referring to the second motion vector group.
3.
   The video encoding device as set forth in 1., wherein:
   in a case where (i) both the first variation and the second variation are smaller than a predetermined threshold and (ii) the first variation is smaller than the second variation, the selecting means assigns, to the target partition, a prediction vector in the first prediction vector group calculated by referring to the first motion vector group;
   in a case where (i) both the first variation and the second variation are smaller than the predetermined threshold and (ii) the second variation is smaller than the first variation, the selecting means assigns, to the target partition, a prediction vector in the second prediction vector group calculated by referring to the second motion vector group; and
   otherwise, to the target partition, a prediction vector in the first prediction vector group or in the second prediction vector group, and carries out encoding of a flag indicative of the prediction vector which has been assigned to the target partition.
4.
   The video encoding device as set forth in 1., wherein:
   in a case where (i) both the first variation and the second variation are smaller than a predetermined threshold and (ii) the first variation is smaller than the second variation, the selecting means assigns, to the target partition, a prediction vector in the first prediction vector group calculated by referring to the first motion vector group;
   in a case where (i) both the first variation and the second variation are smaller than the predetermined threshold and (ii) the second variation is smaller than the first variation, the selecting means assigns, to the target partition, a prediction vector in the second prediction vector group calculated by referring to the second motion vector group; and
   otherwise, the selecting means assigns a zero vector to the target partition.
5.
   The video encoding device as set forth in 1., wherein:
   in a case where the first variation is smaller than a predetermined threshold, the selecting means assigns, to the target partition, a prediction vector in the first prediction vector group; and
   in a case where the first variation is equal to or larger than the predetermined threshold, the selecting means assigns, to the target partition, a prediction vector in the second prediction vector group calculated.
6.
   The video encoding device as set forth in 1., wherein: another selecting means is provided instead of the selecting means, the another selecting means (i) assigning, to the target partition, a prediction vector selected from the first prediction vectors or the second prediction vectors and (ii) outputting a flag indicative of the prediction vector assigned to the target partition.
7.
   The video encoding device as set forth in any one of 1. through 6., wherein: another second calculating means is provided instead of the second calculating means, and calculates a second prediction vector group, which are candidates for a prediction vector which is to be assigned to the target partition, by referring to a second motion vector group, the second motion vector group being made up of second motion vectors which are assigned to respective partitions located around a shifted-collocated partition which is in an encoded frame and is at the location moved from a collocated partition by an amount of a motion vector to be assigned to the target partition, the amount being estimated based on motion vectors assigned to respective encoded partitions located around the target partition, the collocated partition being at the same location as the target partition.
8.
   The video encoding device as set forth in 1., further including:
   third calculating means for calculating a third prediction vector group, which are candidates for a prediction vector which is to be assigned to the target partition, by referring to a third motion vector group, the third motion vector group being made up of third motion vectors which are assigned to respective partitions located around a shifted-collocated partition which is in an encoded frame and is at the location moved from a collocated partition by an amount of a motion vector to be assigned to the target partition, the amount being estimated based on motion vectors assigned to respective encoded partitions located around the target partition; and
   another selecting means, instead of the selecting means, for selecting a prediction vector to be assigned to the target partition, the another selecting means determining the prediction vector to be assigned to the target partition from the first prediction vector group, from the second prediction vector group, or from the third prediction vector group based on first variation of the first motion vectors in the first motion vector group, second variation of the second motion vectors in the second motion vector group, and third variation of the third motion vectors in the third motion vector group.
9.
   The video encoding device as set forth in any one of 1. through 8., wherein:
   in a case where (i) first at least one partition is adjacent to a left side of the target partition and second at least one partition is adjacent to an upper side of the target partition and (ii) the total number of the first at least one partition and the second at least one partition is an odd number, the first prediction vector group includes a median of (i) a motion vector assigned to a partition, of the first at least one partition and the second at least one partition, whose side is adjacent to the target partition and is a longest side of the first at least one partition and the second at least one partition, (ii) motion vectors assigned to respective of the first at least one partition and the second at least one partition, and (iii) a motion vector assigned to a partition, which is adjacent to a right side of a rightmost one of the second at least one partition; and
   in a case where the total number of the first at least one partition and the second at least one partition is an even number, the first prediction vector group includes a median of (i) motion vectors assigned to respective of the first at least one partition and the second at least one partition and (ii) a motion vector assigned to the partition, which is adjacent to the right side of the rightmost one of the second at least one partition.
10.
   The video encoding device as set forth in any one of 1. through 9., wherein: the first prediction vector group includes a median of (i) an average or weighted average of at least one motion vector assigned to respective of the first at least one partition, (ii) an average or weighted average of at least one motion vector assigned to respective of the second at least one partition, and (iii) a motion vector assigned to the partition, which is adjacent to the right side of the rightmost one of the second at least one partition.
11.
   The video encoding device as set forth in any one of 1. through 10., wherein: the first prediction vector group includes an average or weighted average of the motion vectors assigned to respective of (i) first at least one partition adjacent to a left side of the target partition and (ii) second at least one partition adjacent to an upper side of the target partition.
12.
   The video encoding device as set forth in any one of 1. through 11., wherein:
   in a case where the total number of the first at least one partition and the second at least one partition is an odd number, the first prediction vector group includes, as a prediction vector of first type, a median of (i) a motion vector assigned to a partition, of the first at least one partition and the second at least one partition, whose side is adjacent to the target partition and is a longest side of the first at least one partition and the second at least one partition, (ii) motion vectors assigned to respective of the first at least one partition and the second at least one partition, and (iii) a motion vector assigned to a partition, which is adjacent to a right side of a rightmost one of the second at least one partition;
   in a case where the total number of the first at least one partition and the second at least one partition is an even number, the first prediction vector group includes, as the prediction vector of first type, a median of (i) motion vectors assigned to respective of the first at least one partition and the second at least one partition and (ii) a motion vector assigned to the partition, which is adjacent to the right side of the rightmost one of the second at least one partition;
   the first prediction vector group includes, as a prediction vector of second type, a median of (i) an average or weighted average of at least one motion vector assigned to respective of the first at least one partition, (ii) an average or weighted average of at least one motion vector assigned to respective of the second at least one partition, and (iii) a motion vector assigned to the partition, which is adjacent to the right side of the rightmost one of the second at least one partition;
   the first prediction vector group includes, as a prediction vector of third type, an average or weighted average of the motion vectors assigned to respective of the first at least one partition and the second at least one partition; and
   in a case where variation of the motion vectors, which are assigned to respective of the first at least one partition, the second at least one partition, and the partition adjacent to the right side of the rightmost one of the second at least one partition, is smaller than a predetermined threshold, the selecting means selects the prediction vector of third type from the first prediction vector group, and in a case where the variation is equal to or larger than the predetermined threshold, the selecting means selects the prediction vector of first type or the prediction vector of second type from the first prediction vector group.
13.
   The video encoding device as set forth in 12., wherein:
   in a case where the variation is smaller than a predetermined first threshold, the selecting means selects the prediction vector of third type from the first prediction vector group;
   in a case where the variation is larger than the first predetermined threshold and is smaller than a predetermined second threshold, the selecting means selects the prediction vector of first type or the prediction vector of second type from the first prediction vector group; and
   in a case where the variation is larger than the second threshold, the selecting means selects a zero vector.
14.
   The video encoding device as set forth in any one of 1. through 13., wherein:
   in a case where (i) the target partition is an upper one of two partitions, which are obtained by evenly dividing a partition having a size of 16 pixels × 16 pixels into upper and lower partitions, (ii) first at least one partition is adjacent to an upper side of the target partition, (iii) second at least one partition is adjacent to a left side of the target partition, and (iv) the total number of the first at least one partition and the second at least one partition is an even number, the first prediction vector group includes a median of (i) motion vectors assigned to respective of the first at least one partition and the second at least one partition and (ii) a motion vector assigned to a partition, of the first at least one partition and the second at least one partition, whose side is adjacent to the target partition and is a longest side of the first at least one partition and the second at least one partition;
   in a case where the total number of the first at least one partition and the second at least one partition is an odd number, the first prediction vector group includes a median of motion vectors assigned to respective of the first at least one partition and the second at least one partition; and
   in a case where the target partition is a lower one of two partitions, which are obtained by evenly dividing a partition having a size of 16 pixels × 16 pixels into upper and lower partitions, the first prediction vector group includes an average or weighted average of motion vectors assigned to respective partitions adjacent to a left side of the target partition.
15.
   The video encoding device as set forth in any one of 1. through 13., wherein:
   in a case where the target partition is an upper one of two partitions, which are obtained by evenly dividing a partition having a size of 16 pixels × 16 pixels into upper and lower partitions, the first prediction vector group includes an average or weighted average of at least one motion vector assigned to respective of at least one partition adjacent to an upper side of the target partition; and
   in a case where the target partition is lower one of the two partitions, the first prediction vector group includes an average or weighted average of at least one motion vector assigned to respective of at least one partition adjacent to a left side of the target partition.
16.
   The video encoding device as set forth in any one of 1. through 15., wherein:
   in a case where (i) the target partition is an upper one of two partitions, which are obtained by evenly dividing a partition having a size of 16 pixels × 16 pixels into upper and lower partitions, (ii) first at least one partition is adjacent to an upper side of the target partition, (iii) second at least one partition is adjacent to a left side of the target partition, and (iv) the total number of the first at least one partition and the second at least one partition is an even number, the first prediction vector group includes, as a prediction vector of fourth type, a median of (i) motion vectors assigned to respective of the first at least one partition and the second at least one partition and (ii) a motion vector assigned to a partition, of the first at least one partition and the second at least one partition, whose side is adjacent to the target partition and is a longest side of the first at least one partition and the second at least one partition;
   in a case where the total number of the first at least one partition and the second at least one partition is an odd number, the first prediction vector group includes, as the prediction vector of fourth type, a median of motion vectors assigned to respective of the first at least one partition and the second at least one partition;
   in a case where the target partition is the upper one of the two partitions, the first prediction vector group includes, as a prediction vector of fifth type, an average or weighted average of at least one motion vector assigned to respective of the first at least one partition;
   in a case where variation of the motion vectors assigned to respective of the first at least one partition and the second at least one partition is smaller than a predetermined threshold, the selecting means selects the prediction vector of fifth type from the first prediction vector group; and
   in a case where the variation is equal to or larger than the predetermined threshold, the selecting means selects the prediction vector of fourth type from the first prediction vector group.
17.
   The video encoding device as set forth in any one of 1. through 16., wherein:
   in a case where (i) the target partition is a left one of two partitions, which are obtained by evenly dividing a partition having a size of 16 pixels × 16 pixels into left and right partitions, (ii) first at least one partition is adjacent to an upper side of the target partition, (iii) second at least one partition is adjacent to a left side of the target partition, and (iv) the total number of the first at least one partition and the second at least one partition is an even number, the first prediction vector group includes a median of (i) motion vectors assigned to respective of the first at least one partition and the second at least one partition and (ii) a motion vector assigned to a partition, of the first at least one partition and the second at least one partition, whose side is adjacent to the target partition and is a longest side of the first at least one partition and the second at least one partition;
   in a case where the total number of the first at least one partition and the second at least one partition is an odd number, the first prediction vector group includes a median of motion vectors assigned to respective of the first at least one partition and the second at least one partition; and
   in a case where the target partition is a right one of two partitions, which are obtained by evenly dividing a partition having a size of 16 pixels × 16 pixels into left and right partitions, the first prediction vector group includes a motion vector assigned to a partition adjacent to a right side of a rightmost one of at least one partition which is adjacent to an upper side of the target partition.
18.
   The video encoding device as set forth in any one of 1. through 17., wherein:
   in a case where the target partition is left one of two partitions, which are obtained by evenly dividing a partition having a size of 16 pixels × 16 pixels into left and right partitions, the first prediction vector group includes an average or weighted average of at least one motion vector assigned to respective of at least one partition adjacent to a left side of the target partition; and
   in a case where the target partition is right one of the two partitions, the first prediction vector group includes a motion vector assigned to a partition adjacent to a right side of a rightmost one of at least one partition which is adjacent to an upper side of the target partition.
19.
   The video encoding device as set forth in any one of 1. through 18., wherein:
   in a case where (i) the target partition is a left one of two partitions, which are obtained by evenly dividing a partition having a size of 16 pixels × 16 pixels into left and right partitions, (ii) first at least one partition is adjacent to an upper side of the target partition, (iii) second at least one partition is adjacent to a left side of the target partition, and (iv) the total number of the first at least one partition and the second at least one partition is an even number, the first prediction vector group includes, as a prediction vector of sixth type, a median of (i) motion vectors assigned to respective of the first at least one partition and the second at least one partition and (ii) a motion vector assigned to a partition, of the first at least one partition and the second at least one partition, whose side is adjacent to the target partition and is a longest side of the first at least one partition and the second at least one partition;
   in a case where the total number of the first at least one partition and the second at least one partition is an odd number, the first prediction vector group includes, as the prediction vector of sixth type, a median of motion vectors assigned to respective of the first at least one partition and the second at least one partition;
   in a case where the target partition is the left one of the two partitions, the first prediction vector group includes, as a prediction vector of seventh type, an average or weighted average of at least one motion vector assigned to respective of the second at least one partition;
   in a case where variation of the motion vectors assigned to respective of the first at least one partition and the second at least one partition is smaller than a predetermined threshold, the selecting means selects the prediction vector of seventh type from the first prediction vector group; and
   in a case where the variation is equal to or larger than the predetermined threshold, the selecting means selects the prediction vector of sixth type from the first prediction vector group.
20.
   The video encoding device as set forth in any one of 1. through 6., wherein: the second prediction vector group includes an average or weighted average of motion vectors assigned to respective of the collocated partition and adjacent partitions adjacent to the collocated partition.
21.
   The video encoding device as set forth in any one of 1. through 6., wherein:
   in a case where the total number of the collocated partition and adjacent partitions, which are adjacent to the collocated partition, is an even number, the second prediction vector group includes a median of (i) a motion vector assigned to a partition, of the adjacent partitions, whose side is adjacent to the collocated partition and is a longest side of the adjacent partitions and (ii) motion vectors assigned to respective of the collocated partition and the adjacent partitions; and
   in a case where the total number of the collocated partition and the adjacent partitions is an odd number, the second prediction vector group includes a median of the motion vectors assigned to respective of the collocated partition and the adjacent partitions.
22.
   The video encoding device as set forth in any one of 1. through 6., wherein:
   the second prediction vector group includes, as a prediction vector of first type, an average or weighted average of motion vectors assigned to respective of the collocated partition and adjacent partitions adjacent to the collocated partition;
   in a case where the total number of the adjacent partitions is an odd number, the second prediction vector group includes, as a prediction vector of second type, a median of (i) a motion vector assigned to a partition, of the adjacent partitions, whose side is adjacent to the collocated partition and is a longest side of the adjacent partitions and (ii) motion vectors assigned to respective of the collocated partition and the adjacent partitions;
   in a case where the total number of the adjacent partitions is an even number, the second prediction vector group includes, as the prediction vector of second type, a median of the motion vectors assigned to respective of the collocated partition and the adjacent partitions; and
   in a case where variation of the motion vectors, which are assigned to respective of the collocated partition and the adjacent partitions, is smaller than a predetermined threshold, the selecting means selects the prediction vector of first type from the second prediction vector group, and in a case where the variation is equal to or larger than the predetermined threshold, the selecting means selects the prediction vector of second type from the second prediction vector group.
23.
   The video encoding device as set forth in any one of 20. through 22., wherein: the adjacent partitions include a partition, which shares a vertex with the collocated partition.
24.
   The video encoding device as set forth in 7., wherein: the second prediction vector group includes an average or weighted average of motion vectors assigned to respective of the shifted-collocated partition and adjacent partitions adjacent to the shifted-collocated partition.
25.
   The video encoding device as set forth in 7., wherein:
   in a case where the total number of adjacent partitions, which are adjacent to the shifted-collocated partition, is an odd number, the second prediction vector group includes a median of (i) a motion vector assigned to a partition, of the adjacent partitions, whose side is adjacent to the shifted-collocated partition and is a longest side of the adjacent partitions and (ii) motion vectors assigned to respective of the shifted-collocated partition and the adjacent partitions; and
   in a case where the total number of the adjacent partitions is an even number, the second prediction vector group includes a median of the motion vectors assigned to respective of the shifted-collocated partition and the adjacent partitions.
26.
   The video encoding device as set forth in 7., wherein:
   the second prediction vector group includes, as a prediction vector of first type, an average or weighted average of motion vectors assigned to respective of the shifted-collocated partition and adjacent partitions adjacent to the shifted-collocated partition;
   in a case where the total number of the adjacent partitions is an odd number, the second prediction vector group includes, as a prediction vector of second type, a median of (i) a motion vector assigned to a partition, of the adjacent partitions, whose side is adjacent to the shifted-collocated partition and is a longest side of the adjacent partitions and (ii) motion vectors assigned to respective of the shifted-collocated partition and the adjacent partitions;
   in a case where the total number of the adjacent partitions is an even number, the second prediction vector group includes, as the prediction vector of second type, a median of the motion vectors assigned to respective of the shifted-collocated partition and the adjacent partitions; and
   in a case where variation of the motion vectors, which are assigned to respective of the shifted-collocated partition and the adjacent partitions, is smaller than a predetermined threshold, the selecting means selects the prediction vector of first type from the second prediction vector group, and in a case where the variation is equal to or larger than the predetermined threshold, the selecting means selects the prediction vector of second type from the second prediction vector group.
27.
   The video encoding device as set forth in any one of 24. through 26., wherein: the adjacent partitions include a partition, which shares a vertex with the shifted-collocated partition.
28.
   A video decoding device for decoding encoded data obtained by encoding a video together with a difference vector between a prediction vector and a motion vector, which are assigned to each of a plurality of partitions obtained by dividing a frame constituting the video, the video decoding device including:
   first calculating means for calculating a first prediction vector group by referring to a first motion vector group, the first motion vector group being made up of first motion vectors assigned to respective decoded partitions which are located around a target partition in a target frame, and the first prediction vector group being made up of first prediction vectors which are candidates for a prediction vector which is to be assigned to the target partition;
   second calculating means for calculating a second prediction vector group by referring to a second motion vector group, the second motion vector group being made up of second motion vectors assigned to respective partitions which are located around a collocated partition in a decoded frame, the collocated partition being at the same location as the target partition, and the second prediction vector group being made up of second prediction vectors which are candidates for the prediction vector which is to be assigned to the target partition; and
   selecting means for selecting a prediction vector to be assigned to the target partition, the selecting means determining the prediction vector to be assigned to the target partition from the first prediction vector group or from the second prediction vector group based on first variation of the first motion vectors in the first motion vector group and second variation of the second motion vectors in the second motion vector group.
29.
   A data structure of encoded data obtained by encoding a video together with a difference vector between a prediction vector and a motion vector, which are assigned to each of a plurality of partitions obtained by dividing a frame constituting the video, wherein:
   the prediction vector belongs to one of a first prediction vector group and a second prediction vector group, the first prediction vector group being calculated by referring to a first motion vector group made up of first motion vectors assigned to respective encoded partitions which are located around a target partition in a target frame, and the second prediction vector group being calculated by referring to a second motion vector group made up of second motion vectors assigned to respective partitions which are located around a collocated partition which is in a frame encoded before the target frame is encoded and is at the same location as the target partition; the prediction vector is selected from the first prediction vector group or from the second prediction vector group based on variation of the first motion vectors in the first motion vector group and variation of the second motion vectors in the second motion vector group.
30.
   A method for encoding a video together with a difference vector between a prediction vector and a motion vector, which are assigned to each of a plurality of partitions obtained by dividing a frame constituting the video, the method including the steps of:
   (a) calculating a first prediction vector group by referring to a first motion vector group, the first motion vector group being made up of first motion vectors assigned to respective encoded partitions which are located around a target partition in a target frame, and the first prediction vector group being made up of first prediction vectors which are candidates for a prediction vector which is to be assigned to the target partition;
   (b) calculating a second prediction vector group by referring to a second motion vector group, the second motion vector group being made up of second motion vectors assigned to respective partitions which are located around a collocated partition in an encoded frame, the collocated partition being at the same location as the target partition, and the second prediction vector group being made up of second prediction vectors which are candidates for the prediction vector which is to be assigned to the target partition; and
   (c) selecting a prediction vector to be assigned to the target partition, in the step (c), the prediction vector to be assigned to the target partition being determined from the first prediction vector group or from the second prediction vector group based on first variation of the first motion vectors in the first motion vector group and second variation of the second motion vectors in the second motion vector group.
   The present invention is not limited to the embodiments, but can be altered by a skilled person in the art within the scope of the claims. An embodiment derived from a proper combination of technical means disclosed in respective different embodiments is also encompassed in the technical scope of the present invention.

### Industrial Applicability

The present invention is suitably applicable to a video encoding device which encodes a video.

### Reference Signs List

1: Video encoding device
11: Transforming and quantizing section
12: Variable-length coding section
13: Inverse-quantizing and inverse-transform section
14: Buffer memory
15: Intra-prediction image generating section
16: Predictive image generating section
17: Motion vector calculating section
18: Prediction mode control section
19: Motion vector redundancy reducing section (calculating means, selecting means)
191: Spatial-direction prediction vector generating section (first calculating means)
192: Temporal-direction prediction vector generating section (second calculating means)
193: Spatio-temporal-direction prediction vector generating section (second calculating means)
194: Prediction vector selecting section (selecting means)
21: Adder
22: Subtracter
2: Video decoding device
24: Motion vector reconstructing section

## Claims

1. ion vector reconstructing section A video encoding device for encoding a video together with a difference vector between a prediction vector and a motion vector, which are assigned to each of a plurality of partitions obtained by dividing a frame constituting the video, said video encoding device comprising:
first calculating means for calculating a first prediction vector group by referring to a first motion vector group, the first motion vector group being made up of first motion vectors assigned to respective encoded partitions which are located around a target partition in a target frame, and the first prediction vector group being made up of first prediction vectors which are candidates for a prediction vector which is to be assigned to the target partition;
second calculating means for calculating a second prediction vector group by referring to a second motion vector group, the second motion vector group being made up of second motion vectors assigned to respective partitions which are located around a collocated partition in an encoded frame, the collocated partition being at the same location as the target partition, and the second prediction vector group being made up of second prediction vectors which are candidates for the prediction vector which is to be assigned to the target partition; and
selecting means for selecting a prediction vector to be assigned to the target partition, the selecting means determining the prediction vector to be assigned to the target partition from the first prediction vector group or from the second prediction vector group based on first variation of the first motion vectors in the first motion vector group and second variation of the second motion vectors in the second motion vector group.

2. vector group. The video encoding device as set forth in claim 1, wherein:
in a case where the first variation is smaller than the second variation, the selecting means assigns, to the target partition, a prediction vector in the first prediction vector group calculated by referring to the first motion vector group; and
in a case where the second variation is smaller than the first variation, the selecting means assigns, to the target partition, a prediction vector in the second prediction vector group calculated by referring to the second motion vector group.

3. alculated by referring to the second motion vector The video encoding device as set forth in claim 1, wherein:
in a case where (i) both the first variation and the second variation are smaller than a predetermined threshold and (ii) the first variation is smaller than the second variation, the selecting means assigns, to the target partition, a prediction vector in the first prediction vector group calculated by referring to the first motion vector group;
in a case where (i) both the first variation and the second variation are smaller than the predetermined threshold and (ii) the second variation is smaller than the first variation, the selecting means assigns, to the target partition, a prediction vector in the second prediction vector group calculated by referring to the second motion vector group; and
otherwise, the selecting means assigns, to the target partition, a prediction vector in the first prediction vector group or in the second prediction vector group, and carries out encoding of a flag indicative of the prediction vector which has been assigned to the target partition.

4. as been assigned to the target partition. The video encoding device as set forth in claim 1, wherein:
in a case where (i) both the first variation and the second variation are smaller than a predetermined threshold and (ii) the first variation is smaller than the second variation, the selecting means assigns, to the target partition, a prediction vector in the first prediction vector group calculated by referring to the first motion vector group;
in a case where (i) both the first variation and the second variation are smaller than the predetermined threshold and (ii) the second variation is smaller than the first variation, the selecting means assigns, to the target partition, a prediction vector in the second prediction vector group calculated by referring to the second motion vector group; and
otherwise, the selecting means assigns a zero vector to the target partition.

5. get partition. The video encoding device as set forth in any one of claims 1 through 4, wherein,
another second calculating means is provided instead of the second calculating means, and calculates a second prediction vector group, which are candidates for a prediction vector which is to be assigned to the target partition, by referring to a second motion vector group, the second motion vector group being made up of second motion vectors which are assigned to respective partitions located around a shifted-collocated partition which is in an encoded frame and is at a location moved from a collocated partition by an amount of a motion vector to be assigned to the target partition, the amount being estimated based on motion vectors assigned to respective encoded partitions located around the target partition, the collocated partition being at the same location as the target partition.

6. e location as the target partition. A video decoding device for decoding encoded data obtained by encoding a video together with a difference vector between a prediction vector and a motion vector, which are assigned to each of a plurality of partitions obtained by dividing a frame constituting the video, said video decoding device comprising:
first calculating means for calculating a first prediction vector group by referring to a first motion vector group, the first motion vector group being made up of first motion vectors assigned to respective decoded partitions which are located around a target partition in a target frame, and the first prediction vector group being made up of first prediction vectors which are candidates for a prediction vector which is to be assigned to the target partition;
second calculating means for calculating a second prediction vector group by referring to a second motion vector group, the second motion vector group being made up of second motion vectors assigned to respective partitions which are located around a collocated partition in a decoded frame, the collocated partition being at the same location as the target partition, and the second prediction vector group being made up of second prediction vectors which are candidates for the prediction vector which is to be assigned to the target partition; and
selecting means for selecting a prediction vector to be assigned to the target partition, the selecting means determining the prediction vector to be assigned to the target partition from the first prediction vector group or from the second prediction vector group based on first variation of the first motion vectors in the first motion vector group and second variation of the second motion vectors in the second motion vector group.

7. vector group. The video decoding device as set forth in claim 6, wherein:
in a case where the first variation is smaller than the second variation, the selecting means assigns, to the target partition, a prediction vector in the first prediction vector group calculated by referring to the first motion vector group; and
in a case where the second variation is smaller than the first variation, the selecting means assigns, to the target partition, a prediction vector in the second prediction vector group calculated by referring to the second motion vector group.

8. alculated by referring to the second motion vector The video decoding device as set forth in claim 6, wherein:
in a case where (i) both the first variation and the second variation are smaller than a predetermined threshold and (ii) the first variation is smaller than the second variation, the selecting means assigns, to the target partition, a prediction vector in the first prediction vector group calculated by referring to the first motion vector group;
in a case where (i) both the first variation and the second variation are smaller than the predetermined threshold and (ii) the second variation is smaller than the first variation, the selecting means assigns, to the target partition, a prediction vector in the second prediction vector group calculated by referring to the second motion vector group; and
otherwise, the selecting means assigns, to the target partition, a prediction vector in the first prediction vector group or in the second prediction vector group by referring to a flag contained in the encoded data.

9. ag contained in the encoded data. The video decoding device as set forth in claim 6, wherein:
in a case where (i) both the first variation and the second variation are smaller than a predetermined threshold and (ii) the first variation is smaller than the second variation, the selecting means assigns, to the target partition, a prediction vector in the first prediction vector group calculated by referring to the first motion vector group;
in a case where (i) both the first variation and the second variation are smaller than the predetermined threshold and (ii) the second variation is smaller than the first variation, the selecting means assigns, to the target partition, a prediction vector in the second prediction vector group calculated by referring to the second motion vector group, and
otherwise, the selecting means assigns a zero vector to the target partition.

10. et partition. The video decoding device as set forth in any one of claims 6 through 9, wherein:
another second calculating means is provided instead of the second calculating means, and calculates a second prediction vector group, which are candidates for a prediction vector which is to be assigned to the target partition, by referring to a second motion vector group, the second motion vector group being made up of second motion vectors which are assigned to respective partitions located around a shifted-collocated partition which is in an encoded frame and is at a location moved from a collocated partition by an amount of a motion vector to be assigned to the target partition, the amount being estimated based on motion vectors assigned to respective encoded partitions located around the target partition, the collocated partition being at the same location as the target partition.
